(19) Europäisches Patentamt / European Patent Office / Office européen des brevets

(11) **EP 4 174 780 A1**

(12) **EUROPEAN PATENT APPLICATION**
published in accordance with Art. 153(4) EPC

(43) Date of publication:
**03.05.2023 Bulletin 2023/18**

(21) Application number: **21832487.9**

(22) Date of filing: **16.06.2021**

(51) International Patent Classification (IPC):
*G06T 9/00* (2006.01)   *H04N 19/50* (2014.01)
*H04N 19/597* (2014.01)

(52) Cooperative Patent Classification (CPC):
**G06T 9/00; H04N 19/50; H04N 19/597**

(86) International application number:
**PCT/JP2021/022800**

(87) International publication number:
**WO 2022/004377 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2020 JP 2020112453**

(71) Applicant: **Sony Group Corporation**
**Minato-Ku, Tokyo, 108-0075 (JP)**

(72) Inventors:
• **KUMA Satoru**
**Tokyo 108-0075 (JP)**
• **YASUDA Hiroyuki**
**Tokyo 108-0075 (JP)**
• **NAKAGAMI Ohji**
**Tokyo 108-0075 (JP)**

(74) Representative: **D Young & Co LLP**
**120 Holborn**
**London EC1N 2DY (GB)**

(54) **INFORMATION PROCESSING DEVICE AND METHOD**

(57) The present disclosure relates to an information processing apparatus and method that enable easier control of an information amount of point cloud data.

A reference structure of geometry data in encoding of a point cloud is formed, in which the reference structure is layered according to groups into which points of the point cloud representing a three-dimensional shaped object as a set of the points are classified. On the basis of the formed reference structure, for each point, a prediction value of the geometry data is derived, and a prediction residual that is a difference between the geometry data and the prediction value is derived. The derived prediction residual of the geometry data of each point is encoded. The present disclosure can be applied to, for example, an information processing apparatus, an image processing apparatus, an encoding device, a decoding device, an electronic device, an information processing method, a program, or the like.

*FIG. 4*

| | EXTENSION OF Predictive Geometry Coding |
|---|---|
| 1 | GROUP LAYERING IS PERFORMED ON REFERENCE STRUCTURE |
| 1−1 | POINTS ARE GROUPED AND SORTED |
| 1−1−1 | GROUPING IS PERFORMED IN ACCORDANCE WITH POSITIONS OF POINTS |
| 1−1−2 | GROUPING IS PERFORMED IN ACCORDANCE WITH FEATURES OF POINTS |
| 1−2 | LAYER INFORMATION IS SIGNALED |
| 1−2−1 | SIGNALING IS PERFORMED IN PARENT NODE |
| 1−2−2 | SIGNALING IS PERFORMED IN CHILD NODE |
| 1−3 | QUANTIZATION STEP IS CONTROLLED FOR EACH LAYER |
| 1−3−1 | QUANTIZATION STEP OF EACH LAYER IS SIGNALED |
| 1−4 | ABOUT ENCODING |
| 1−4−1 | ARITHMETIC ENCODING IS INDEPENDENTLY PERFORMED FOR EACH LAYER |
| 1−4−2 | ARITHMETIC ENCODING IS PERFORMED WITHOUT CLASSIFICATION FOR EACH LAYER |

EP 4 174 780 A1

**Description**

TECHNICAL FIELD

The present disclosure relates to an information processing apparatus and method, and particularly relates to an information processing apparatus and method capable of more easily controlling an information amount of point cloud data.

BACKGROUND ART

Conventionally, for example, a method of encoding 3D data representing a three-dimensional structure such as a point cloud has been considered (for example, see Non Patent Document 1). Furthermore, a method has been conceived in which a difference value (a prediction residual) from a prediction value is derived when geometry data of this point cloud is encoded, and the prediction residual is encoded (for example, see Non

Patent Document 2).

CITATION LIST

NON PATENT DOCUMENT

Non Patent Document 1: R. Mekuria, Student Member IEEE, K. Blom, P. Cesar., Member, IEEE, "Design, Implementation and Evaluation of a Point Cloud Codec for Tele-Immersive Video", tcsvt_paper_submitted_february.pdf
Non Patent Document 2: Zhenzhen Gao, David Flynn, Alexis Tourapis, and Khaled Mammou, "[G-PCC] [New proposal] Predictive Geometry Coding", ISO/IEC JTC1/SC29/WG11 MPEG2019/m51012, October 2019, Geneva, CH

SUMMARY OF THE INVENTION

PROBLEMS TO BE SOLVED BY THE INVENTION

Since point cloud data includes geometry data and attribute data of a plurality of points, an information amount can be easily controlled by controlling the number of points.
However, in a case of the method described in Non Patent Document 2, geometry data of other points is referred to at a time of prediction value derivation. Therefore, when a reference structure is constructed, restriction by the reference structure is large, and there has been a possibility that reduction of the number of points becomes difficult. Therefore, there has been a possibility that it becomes difficult to control the information amount.
The present disclosure has been made in view of such a situation, and an object thereof is to enable more easy control of an information amount of point cloud data.

SOLUTIONS TO PROBLEMS

An information processing apparatus according to one aspect of the present technology is an information processing apparatus including: a reference structure forming unit configured to form a reference structure of geometry data in encoding of a point cloud, the reference structure being layered according to groups into which points of the point cloud representing a three-dimensional shaped object as a set of the points are classified; a prediction residual derivation unit configured to derive a prediction value of the geometry data and derive a prediction residual that is a difference between the geometry data and the prediction value, for each point on the basis of the reference structure formed by the reference structure forming unit; and an encoding unit configured to encode the prediction residual of the geometry data of each point, the prediction residual being derived by the prediction residual derivation unit.
An information processing method according to one aspect of the present technology is an information processing method including: forming a reference structure of geometry data in encoding of a point cloud, the reference structure being layered according to groups into which points of the point cloud representing a three-dimensional shaped object as a set of the points are classified; deriving a prediction value of the geometry data and deriving a prediction residual that is a difference between the geometry data and the prediction value, for each point on the basis of the formed reference structure; and encoding the derived prediction residual of the geometry data of each point.
An information processing apparatus of another aspect of the present technology is an information processing apparatus including: a decoding unit configured to decode coded data corresponding to a group layer that is desired among coded data obtained by encoding a prediction residual that is a difference between geometry data of each point and a prediction value of the geometry data, the prediction residual being derived on the basis of a reference structure, on the basis of layer information indicating the group layer that is a layer according to each of groups in the reference structure of the geometry data in encoding of a point cloud, the reference structure being layered according to the groups into which points of the point cloud representing a three-dimensional shaped object as a set of the points are classified.

An information processing method according to another aspect of the present technology is an information processing method including: decoding coded data corresponding to a group layer that is desired among coded data obtained by encoding a prediction residual that is a difference between geometry data of each point and a prediction value of the geometry data, the prediction residual being derived on the basis of a reference structure, on the basis of layer information indicating the group layer that is a layer according to each of groups in the reference structure of the geometry data in encoding of a point cloud, the reference structure being layered according to the groups into which points of the point cloud representing a three-dimensional shaped object as a set of the points are classified.

In the information processing apparatus and method according to one aspect of the present technology, a reference structure of geometry data in encoding of a point cloud is formed, in which the reference structure is layered according to groups into which points of the point cloud representing a three-dimensional shaped object as a set of the points are classified. On the basis of the formed reference structure, for each point, a prediction value of the geometry data is derived, and a prediction residual that is a difference between the geometry data and the prediction value of the geometry data is derived. The derived prediction residual of the geometry data of each point is encoded.

In the information processing apparatus and method according to another aspect of the present technology, on the basis of layer information indicating a group layer that is a layer according to each of groups in a reference structure of geometry data in encoding of a point cloud, in which the reference structure is layered according to the groups into which points of the point cloud representing a three-dimensional shaped object as a set of the points are classified, coded data corresponding to the group layer that is desired is decoded among coded data obtained by encoding a prediction residual that is a difference between the geometry data of each point and a prediction value of the geometry data, in which the prediction residual is derived on the basis of the reference structure.

BRIEF DESCRIPTION OF DRAWINGS

Fig. 1 is a view for explaining predictive geometry coding.
Fig. 2 is a view for explaining predictive geometry coding.
Fig. 3 is a view for explaining predictive geometry coding.
Fig. 4 is a view for explaining an extension method of predictive geometry coding.
Fig. 5 is a view for explaining an example of a reference structure forming method.
Fig. 6 is a view for explaining an example of layer information.
Fig. 7 is a block diagram illustrating a main configuration example of an encoding device.
Fig. 8 is a block diagram illustrating a main configuration example of a geometry data encoding unit.
Fig. 9 is a block diagram illustrating a main configuration example of a reference structure forming unit.
Fig. 10 is a flowchart for explaining an example of a flow of an encoding process.
Fig. 11 is a flowchart for explaining an example of a flow of a geometry data encoding process.
Fig. 12 is a flowchart for explaining an example of a flow of a reference structure forming process.
Fig. 13 is a block diagram illustrating a main configuration example of a decoding device.
Fig. 14 is a block diagram illustrating a main configuration example of a geometry data decoding unit.
Fig. 15 is a flowchart for explaining an example of a flow of a decoding process.
Fig. 16 is a flowchart for explaining an example of a flow of a geometry data decoding process.
Fig. 17 is a block diagram illustrating a main configuration example of a transcoder.
Fig. 18 is a flowchart for explaining an example of a flow of a transcoding process.
Fig. 19 is a view for explaining an extension method of predictive geometry coding.
Fig. 20 is a block diagram illustrating a main configuration example of an encoding device.
Fig. 21 is a flowchart for explaining an example of a flow of an encoding process.
Fig. 22 is a block diagram illustrating a main configuration example of a decoding device.
Fig. 23 is a flowchart for explaining an example of a flow of a decoding process.
Fig. 24 is a block diagram illustrating a main configuration example of a transcoder.
Fig. 25 is a flowchart for explaining an example of a flow of a transcoding process.
Fig. 26 is a flowchart for explaining an example of a flow of an encoding process.
Fig. 27 is a flowchart for explaining an example of a flow of a decoding process.

Fig. 28 is a block diagram illustrating a main configuration example of a computer.

MODE FOR CARRYING OUT THE INVENTION

Hereinafter, embodiments for implementing the present disclosure (hereinafter, referred to as embodiments) will be described. Note that the description will be given in the following order.

1. First embodiment (layering of reference structure)
2. Second embodiment (prediction residual encoding of attribute data)
3. Third embodiment (layering of reference structure and prediction residual encoding of attribute data)
4. Supplementary note

<1. First embodiment>

<Documents and the like that support technical contents and technical terms>

The scope disclosed in the present technology includes not only the contents described in the embodiment, but also the contents described in the following non patent documents known at the time of filing of the application.

Non Patent Document 1: (described above)
Non Patent Document 2: (described above)

That is, the contents described in the above-described Non Patent Documents, the contents of other documents referred to in the above-described Non Patent Documents, and the like are also basis for determining the support requirement.

<Point cloud>

Conventionally, there has been 3D data such as: a point cloud representing a three-dimensional structure by position information, attribute information, and the like of points; and a mesh that is configured by vertices, edges, and surfaces and defines a three-dimensional shape by using polygonal representation.
For example, in a case of a point cloud, a three-dimensional structure (a three-dimensional shaped object) is expressed as a set of a large number of points. Data of the point cloud (also referred to as point cloud data) includes position information (also referred to as geometry data) and attribute information (also referred to as attribute data) of each point. The attribute data can include any information. For example, color information, reflectance information, normal line information, and the like of each point may be included in the attribute data. As described above, the point cloud data has a relatively simple data structure, and can express any three-dimensional structure with sufficient accuracy by using a sufficiently large number of points.

<Predictive geometry coding>

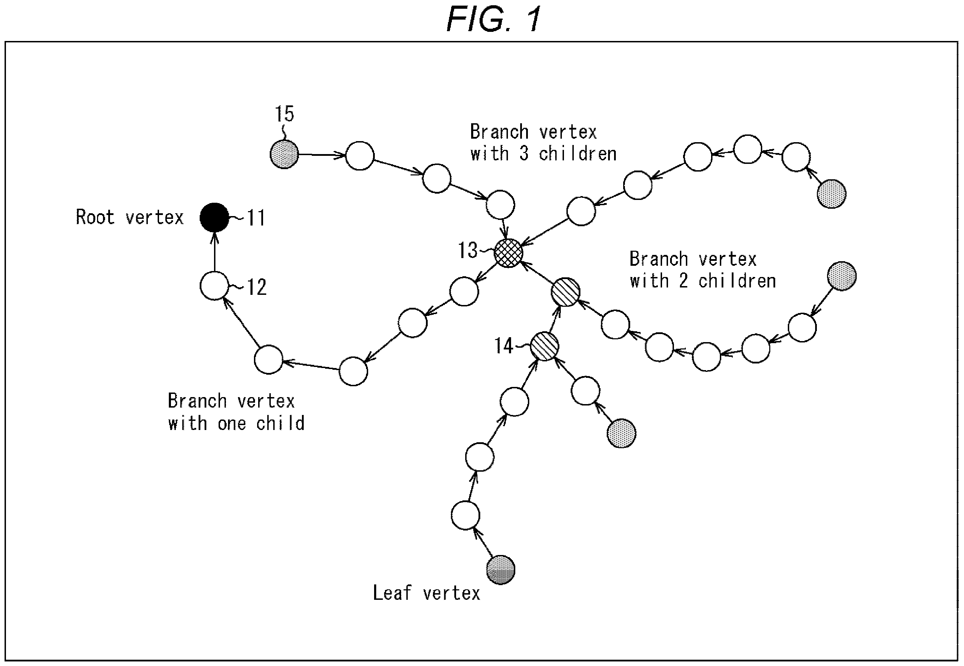

Since such point cloud data has a relatively large data amount, the data amount is generally reduced by encoding or the like at a time of recording or transmitting data. As a method of this encoding, various methods have been proposed. For example, Non Patent Document 2 describes predictive geometry coding as a method of encoding geometry data.
In the predictive geometry coding, a difference (also referred to as a prediction residual) between geometry data of each point and a prediction value thereof is derived, and the prediction residual is encoded. In deriving the prediction value, geometry data of another point is referred to.
For example, as illustrated in Fig. 1, a reference structure (also referred to as a prediction tree) is formed indicating which point's geometry data is referred to at a time of deriving a prediction value of geometry data of each point. In Fig. 1, circles indicate points, and arrows indicate reference relationships. Any forming method may be adopted for this reference structure. For example, the reference structure is formed such that geometry data of a nearby point is referred to.
In the prediction tree in the example of Fig. 1, there are formed a point 11 (Root vertex) that does not refer to geometry data of other points, a point 12 (Branch vertex with one child) that is referred to from another one point, a point 13 (Branch vertex with 3 children) that is referred to from other three points, a point 14 (Branch vertex with 2 children) that is referred to from other two points, and a point 15 (Leaf vertex) that is not referred to from other points.
Note that, in Fig. 1, only one point 12 is denoted by a reference sign, but all points indicated by white circles are the points 12. Similarly, only one point 14 is denoted by a reference sign, but all points indicated by hatched circles in Fig. 1 are the points 14. Similarly, only one point 15 is denoted by a reference sign, but all points indicated by gray circles in Fig. 1 are the points 15. Note that the structure of the prediction tree is an example, and is not limited to the example of Fig. 1. Therefore, any number of each of the points 11 to 15 may be adopted. Furthermore, a pattern of the number of points to be referred to is not limited to the example of Fig. 1. For example, there may be points referred to from four or more points.

A prediction value of the geometry data of each point is derived in accordance with such a reference structure (prediction tree). For example, prediction values are derived by four methods (four modes), and an optimal prediction value is selected from among them.

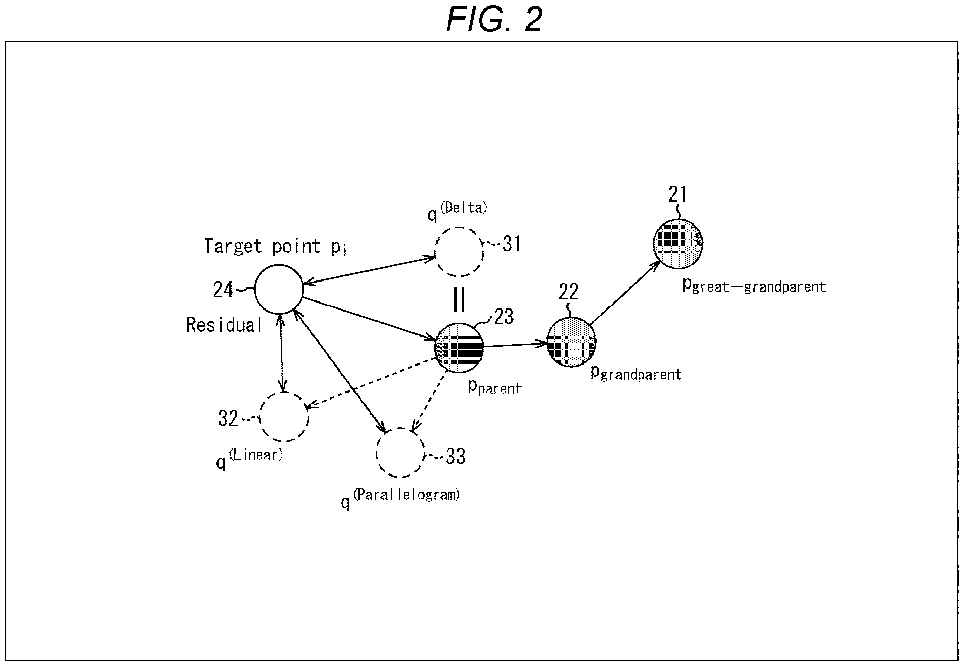

For example, in a reference structure of points 21 to 24 in Fig. 2, it is assumed that the point 24 is set as a processing target point pi, and a prediction value of geometry data thereof is derived. In a first mode, in such a reference structure, the point 23 ($P_{parent}$) that is a reference destination (also referred to as a parent node) of the point 24 is set as a prediction point 31 of the point 24, and geometry data of the prediction point 31 is set as the prediction value of the geometry data of the point 24. The geometry data of this prediction point 31 (that is, the prediction value of the geometry data of the point 24 in the first mode) is referred to as $q^{(Delta)}$.

In a second mode, in such a reference structure, when a start point of an inverse vector of a reference vector (an arrow between the point 23 and the point 22) in which the point 23 is a start point and the point 22 ($P_{grandparent}$), which is a parent node of the point 23, is an end point is set to the point 23, an end point of the inverse vector is set to a prediction point 32, and geometry data of the prediction point 32 is set to a prediction value of the geometry data of the point 24. The geometry data of this prediction point 32 (that is, the prediction value of the geometry data of the point 24 in the second mode) is referred to as $q^{(Linear)}$.

In a third mode, in such a reference structure, when a start point of an inverse vector of a reference vector (an arrow between the point 22 and the point 21) in which the point 22 is a start point and the point 21 ($P_{great-grandparent}$), which is a parent node of the point 22, is an end point is set to the point 23, an end point of the inverse vector is set to a prediction point 33, and geometry data of the prediction point 33 is set to a prediction value of the geometry data of the point 24. The geometry data of this prediction point 33 (that is, the prediction value of the geometry data of the point 24 in the third mode) is referred to as $q^{(Parallelogram)}$.

In a fourth mode, the point 24 is set as a root point (Root vertex), and geometry data of other points is not referred to. That is, instead of the prediction residual, the geometry data of the point 24 is encoded for this point 24. In a case of the reference structure of the example of Fig. 2, this mode is excluded because the point 24 refers to the point 23.

The prediction residual (a difference from the geometry data of the point 24) is derived for prediction values of individual modes (in the case of the example of Fig. 2, three modes) as described above, and a smallest prediction residual is selected. That is, a prediction point nearest to the point 24 is selected, and a prediction residual corresponding to the prediction point is selected.

By performing such a process for each point, the prediction residual of each point is derived. Then, the prediction residual is encoded. By doing in this way, an increase in an encoding amount can be suppressed.

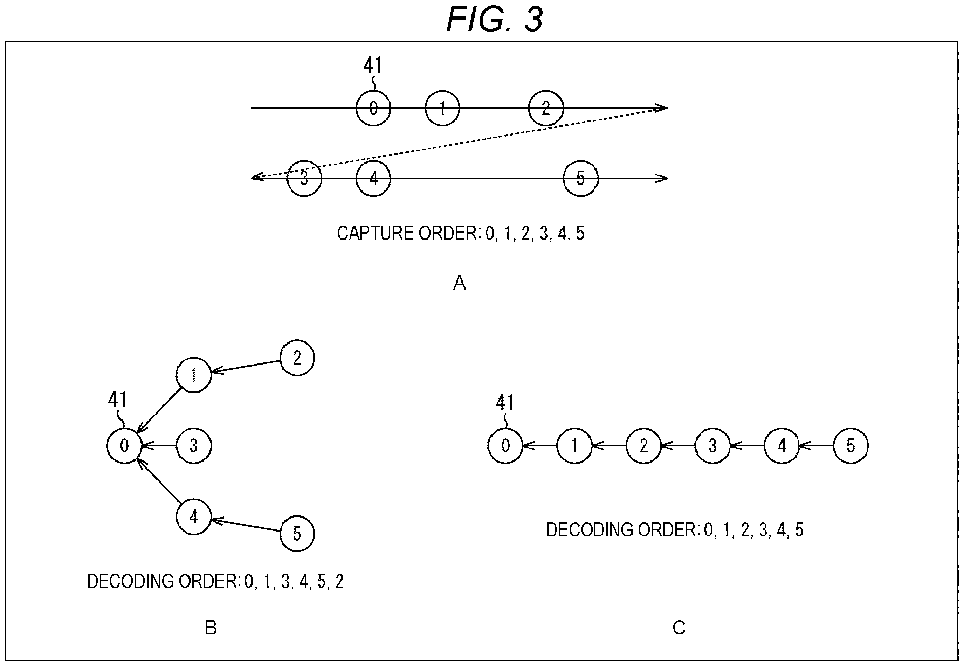

Note that the reference structure (prediction tree) is formed on the basis of a predetermined method, but any forming method may be adopted for this. For example, it is assumed that each point 41 is captured in an order illustrated in A of Fig. 3. In Fig. 3, circles indicate points, and numbers in the circles indicate capture orders. In Fig. 3, only the point 41 whose capture order is 0 is denoted by a reference sign, but all the circles in Fig. 3 are the points 41. That is, Fig. 3 illustrates five points 41 whose capture orders are 0 to 5.

In such a case, for example, as illustrated in B of Fig. 3, the reference structure may be formed such that each point refers to a nearest point (regards as a parent node). Encoding and decoding are performed in accordance with the reference structure, and a child node (a node whose reference destination is a processing target node) is searched for using a stack. Therefore, a decoding order in this case is an order of a point 41 whose capture order is "0", a point 41 whose capture order is "1", a point 41 whose capture order is "3", a point 41 whose capture order is "4", a point 41 whose capture order is "5", and a point 41 whose capture order is "2",

Furthermore, for example, as illustrated in C of Fig. 3, the reference structure may be formed such that each point refers to a point having an immediately previous capture order (regards as a parent node). The decoding order in this case is similar to the capture order.

<Information amount control in point cloud data>

Since the point cloud data includes geometry data and attribute data of a plurality of points, an information amount thereof can be easily controlled by controlling the number of points.

For example, by reducing the number of points at a time of encoding geometry data, an increase in load of an encoding process can be suppressed. Furthermore, a bit rate of coded data of geometry data generated by the encoding can be controlled. That is, a storage capacity at a time of storing the coded data and a transmission rate at a time of transmitting the coded data can be controlled.

Furthermore, the number of points can also be reduced when the geometry data is decoded. For example, by having a configuration in which coded data of geometry data of a point cloud can be partially decoded, the coded data can be decoded only for some points to generate the geometry data. For example, by controlling the points to be decoded, a resolution (also referred to as a spatial resolution) of the point cloud to be generated can be controlled. Such a decoding method is also referred to as scalable decoding (or scalability of decoding). By implementing such scalable decoding, a decoding process for unnecessary data can be omitted, and thus an increase in load of the decoding process can be suppressed.

Moreover, the number of points can also be reduced at a time of transcoding, which is a process of decoding coded data of geometry data, changing a desired parameter, and re-encoding. By doing in this way, an increase in load of the transcoding can be suppressed. Furthermore, a bit rate of coded data of geometry data generated by the transcoding can be controlled.

<Information amount control in case of applying predictive geometry coding>

However, in a case of the predictive geometry coding described in Non Patent Document 2, as described above, geometry data of another point is referred to in deriving a prediction value. Therefore, when a reference structure is constructed, restriction by the reference structure is large, and there has been a possibility that reduction of the number of points becomes difficult. Therefore, there has been a possibility that it becomes difficult to control the information amount.

For example, when a node at some midpoint of a prediction tree is deleted, it is no longer possible to derive a prediction value of a child node of the node and a node under the child node. That is, it is not possible to exclusively delete a desired point regardless of this prediction tree (a point of the child node is also deleted). Therefore, a phenomenon may occur in which, when a certain point is deleted, many points around the point are deleted in accordance with a structure of the prediction tree. In this case, for example, a distribution form of the points locally greatly changes, and there has been a possibility that a defect occurs such as deformation of a shape of an object indicated by the point cloud (that is, the point cloud cannot correctly represent the shape of the object).

As described above, in a case of the predictive geometry coding described in Non Patent Document 2, it has been practically difficult to achieve the above-described bit rate control and scalability at a time of encoding, decoding, or transcoding of geometry data.

<Layering of reference structure>

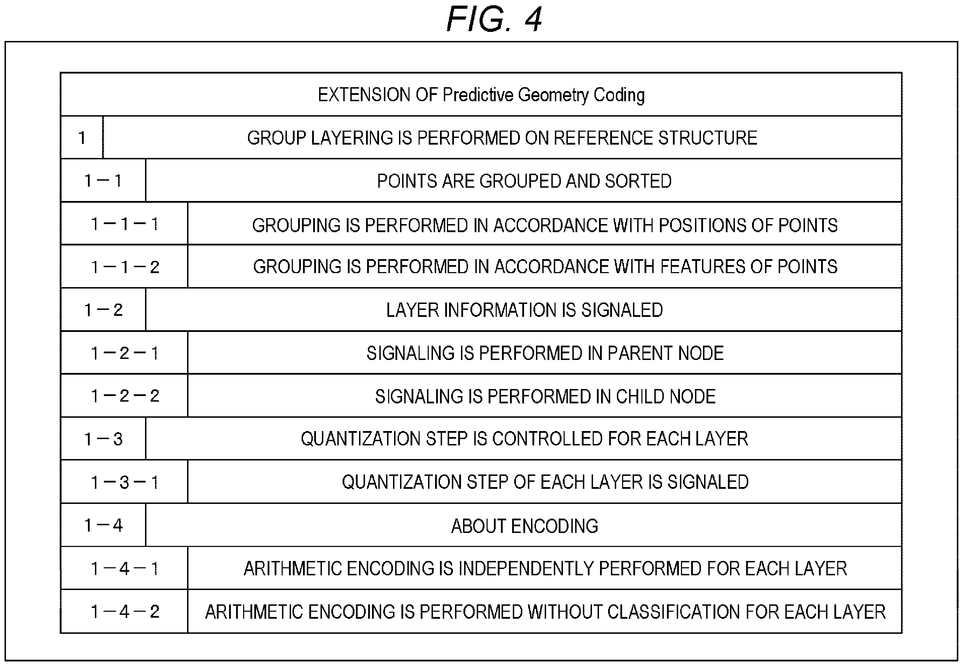

Therefore, the predictive geometry coding is extended as shown in a top row of a table illustrated in Fig. 4, a group of points is formed as shown in a second row (the row of "1") from the top of the table illustrated in Fig. 4, and a reference structure in which the group is made as a layer is formed. Note that, this layer is referred to as a group layer, and such layering of a reference structure is referred to as group layering.

For example, a reference structure of geometry data in encoding of a point cloud is formed, in which the reference structure is layered according to groups into which points of the point cloud representing a three-dimensional shaped object as a set of the points are classified. On the basis of the formed reference structure, for each point, a prediction value of the geometry data is derived, and a prediction residual that is a difference between the geometry data and the prediction value is derived. The derived prediction residual of the geometry data of each point is encoded.

Furthermore, for example, in the information processing apparatus, there are provided: a reference structure forming unit configured to form a reference structure of geometry data in encoding of a point cloud, in which the reference structure is layered according to groups into which points of the point cloud representing a three-dimensional shaped object as a set of the points are classified; a prediction residual derivation unit configured to derive a prediction value of the geometry data and derive a prediction residual that is a difference between the geometry data and the prediction value, for each point on the basis of the reference structure formed by the reference structure forming unit; and an encoding unit configured to encode the prediction residual of the geometry data of each point, in which the prediction residual is derived by the prediction residual derivation unit.

By performing the group layering on the prediction tree in this manner, selection of points for each group layer is to be according to the prediction tree. For example, a point belonging to a lowest layer of this group layer corresponds to a node on a most leaf side (Leaf side) in the prediction tree, and a point belonging to another group layer corresponds to a node on a root side (Root side) with respect to the node. Therefore, a point belonging to a group layer on a lower side can be deleted without affecting points belonging to a group layer on an upper side. For example, it is possible to encode only geometry data of points belonging to a highest layer to an intermediate layer of the group layers (delete geometry data of points belonging to a lower group layer).

Therefore, an increase in load of the encoding process can be suppressed. Furthermore, a bit rate of coded data of geometry data generated by the encoding can be controlled. In addition, a storage capacity at a time of storing the coded data and a transmission rate at a time of transmitting the coded data can be controlled.

Note that, as shown in a third row (the row of "1-1") from the top of the table illustrated in Fig. 4, when this reference structure is formed, captured individual points may be grouped, and the individual points may be sorted (rearranged) in an order of the group.

For example, by performing group classification of the points, rearranging the points for each group, and setting a reference destination of geometry data of each point in the rearranged order, a reference structure layered according to the groups may be formed.

For example, in the information processing apparatus, the reference structure forming unit may include: a group-classification processing unit configured to perform group classification of points; a rearrangement unit configured to rearrange the points for each of the groups; and a group-layered reference structure forming unit configured to form a reference structure layered according to the groups, by setting a reference destination of the geometry data of each point in an order rearranged by the rearrangement unit.

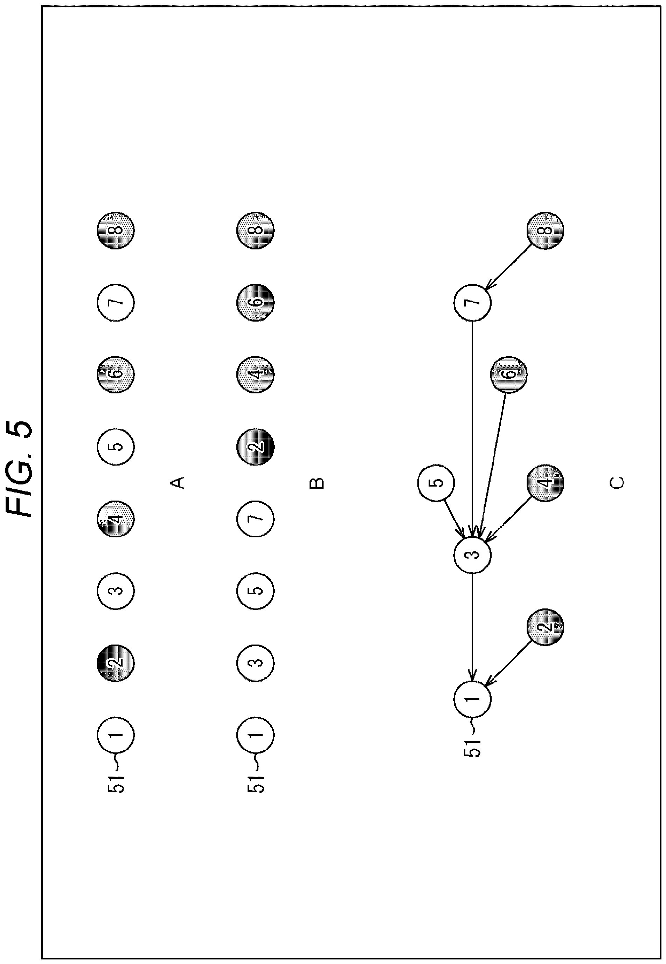

For example, it is assumed that eight points 51 are captured as illustrated in A of Fig. 5. In A of Fig. 5, circles indicate points, and numbers in the circles indicate capture orders. Note that, in Fig. 5, only one point 51 is denoted by a reference sign, but all points indicated by circles in Fig. 5 are the points 51.

These points 51 are subjected to group classification by a predetermined method. Any method may be adopted for this group classification. In a case of A of Fig. 5, the points 51 are classified into a group of the points 51 whose capture order is an odd number (1, 3, 5, and 7) and a group of the points 51 whose capture order is an even number (2, 4, 6, and 8).

Then, for example, as illustrated in B of Fig. 5, these points 51 are sorted for each group. In the case of the example of B of Fig. 5, the points 51 are rearranged in the order of the group of the points 51 whose capture order is an odd number (1, 3, 5, and 7) and the group of the points 51 whose capture order is an even number (2, 4, 6, and 8).

Then, a reference destination of each point is obtained in the rearranged order, and a prediction tree is formed. For example, in a case of the prediction tree illustrated in C of Fig. 5, first, a reference destination is set for each point 51 whose capture order is an odd number, and thereafter, a reference destination is set for each point 51 whose capture order is an even number. Therefore, in this prediction tree, a node corresponding to the point 51 whose capture order is an even number is formed as a node on a leaf side (a child node side) with respect to a node corresponding to the point 51 whose capture order is an odd number. Therefore, even if the point 51 whose capture order is an even number is deleted, the points 51 whose capture order is an odd number are not affected.

That is, even after the prediction tree is formed, a point to be encoded can be selected, so that an increase in load of the encoding process can be suppressed. Furthermore, a bit rate of coded data of geometry data generated by the encoding can be controlled.

Note that, by forming the prediction tree with such a technique, after sorting, the prediction tree can be formed by a method similar to the method described in Non Patent Document 2. Therefore, group layering can be more easily performed on the prediction tree. As a result, it is possible to suppress an increase in cost for forming the prediction tree.

Note that, as shown in a fourth row (the row of "1-1-1") from the top of the table illustrated in Fig. 4, grouping (group classification of points) may be performed in accordance with positions of the points.

For example, on the basis of a position of each point, group classification may be performed such that a density of points belonging to each group in a three-dimensional space becomes uniform (such that the points have predetermined intervals). By performing group classification in this manner, the number of points can be reduced such that a density of points to be encoded becomes uniform. That is, it is possible to suppress an increase in load of the encoding process or to control a bit rate of coded data so as to reduce a change in a distribution form of a point cloud (that is, a shape of an object indicated by the point cloud). In addition, in this case, a resolution (spatial resolution) of the point cloud on the three-dimensional space can be controlled by increasing or decreasing the number of group layers from which points are deleted.

Furthermore, as shown in a fifth row (the row of "1-1-2") from the top of the table illustrated in Fig. 4, grouping (group classification of points) may be performed in accordance with features of the points.

Any features of the points may be used for this group classification. For example, grouping may be performed in accordance with points corresponding to edges or corners of the point cloud, or grouping may be performed in accordance with points corresponding to flat portions of the point cloud. Of course, the features may be other than these examples. By performing group classification in this manner, for example, points having (a feature of) a relatively small subjective influence at a time of reproduction can be deleted, while points having (a feature of) a relatively large subjective influence at a time of reproduction can be encoded. As a result, it is possible to suppress an increase in load of the encoding process and to control a bit rate of coded data so as to suppress reduction in subjective image quality at the time of reproduction.

Note that any grouping method may be adopted without limiting to these examples. For example, group classification may be performed in accordance with both the positions and the features of the points.

Furthermore, as shown in a sixth row (the row of "1-2") from the top of the table illustrated in Fig. 4, layer information which is information regarding a group layer may be signaled.

For example, layer information indicating a group layer may be generated and encoded for each point. For example, in the information processing apparatus, the reference structure forming unit may further include a layer information generation unit configured to generate, for each point, layer information indicating a group layer that is a layer according to each of groups in the reference structure, and the encoding unit may further encode the layer information generated by the layer information generation unit.

Note that, in this layer information, the group layer may be indicated by a difference (a relative value from a parent node) from a group layer of a parent node.

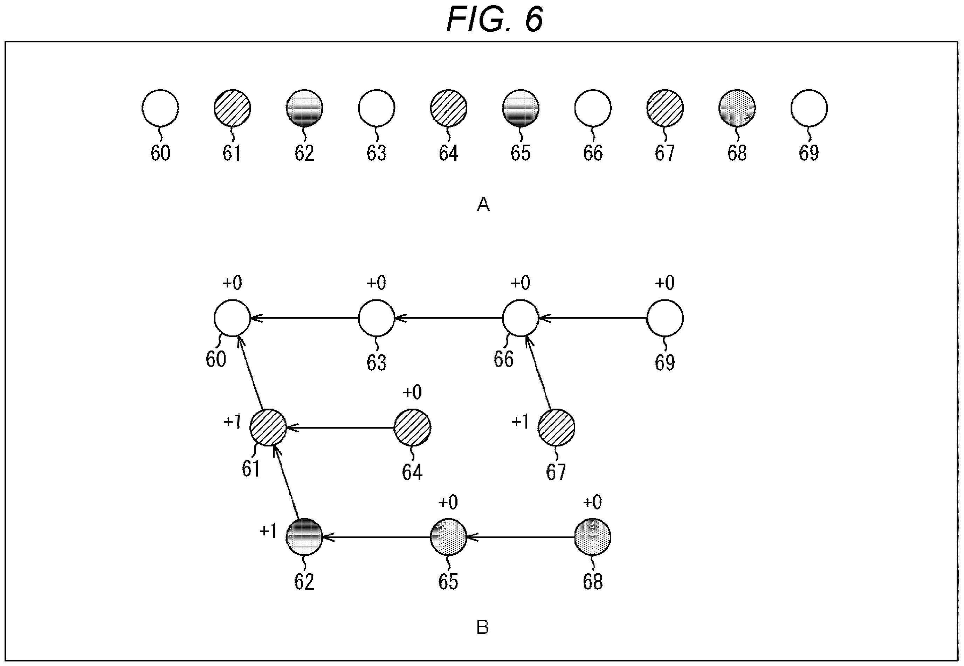

For example, it is assumed that points 60 to 69 are captured as illustrated in A of Fig. 6. Then, it is assumed that the point 60, the point 63, the point 66, and the point 69 are classified into a first group, the point 61, the point 64, and the point 67 are classified into a second group, and the point 62, the point 65, and the point 68 are classified into a third group. Then, it is assumed that these points are sorted for each group as described above and set with a reference destination, and a prediction tree as illustrated in B of Fig. 6 is formed.

In a case of this example, the point 61 belongs to the second group, and a parent node of a node corresponding to the point 61 in the prediction tree is a node corresponding to the point 60 belonging to the first group, so that "+1" is generated as the layer information for the node corresponding to the point 61. This "+1" indicates that a processing target node belongs to a group layer (the second group) that is one layer lower than a group layer (the first group) of the parent node.

Similarly, the point 62 belongs to the third group, and a parent node of a node corresponding to the point 62 in the prediction tree is the node corresponding to the point 61 belonging to the second group, so that "+1" is generated as the layer information for the node corresponding to the point 62.

Whereas, the point 63 belongs to the first group, and a parent node of a node corresponding to the point 63 in the prediction tree is a node corresponding to the point 60 belonging to the same first group, so that "+0" is generated as the layer information for the node corresponding to the point 63. Similarly, the point 64 belongs to the second group, and a parent node of a node corresponding to the point 64 in the prediction tree is the node corresponding to the point 61 belonging to the same second group, so that "+0" is generated as the layer information for the node corresponding to the point 64. Similarly, the point 65 belongs to the third group, and a parent node of a node corresponding to the point 65 in the prediction tree is the node corresponding to the point 62 belonging to the same third group, so that "+0" is generated as the layer information for the node corresponding to the point 65.

Similarly, the point 66 belongs to the first group, and a parent node of a node corresponding to the point 66 in the prediction tree is the node corresponding to the point 63 belonging to the same first group, so that "+0" is generated as the layer information for the node corresponding to the point 66. The point 67 belongs to the second group, and a parent node of a node corresponding to the point 67 in the prediction tree is the node corresponding to the point 66 belonging to the first group, so that "+1" is generated as the layer information for the node corresponding to the point 67.

The point 68 belongs to the third group, and a parent node of a node corresponding to the point 68 in the prediction tree is the node corresponding to the point 65 belonging to the same third group, so that "+0" is generated as the layer information for the node corresponding to the point 68. Similarly, the point 69 belongs to the first group, and a parent node of a node corresponding to the point 69 in the prediction tree is the node corresponding to the point 66 belonging to the same first group, so that "+0" is generated as the layer information for the node corresponding to the point 669.

Note that, since there is no parent node of a node corresponding to the point 60, "+0" is generated as the layer information for the node corresponding to the point 60.

In this way, by signaling the layer information, the group layer of each point can be easily grasped on a decoding side on the basis of the signaled layer information. Therefore, at a time of decoding, only coded data of a desired group layer can be decoded on the basis of the layer information. That is, scalable decoding can be easily achieved. In other words, since the decoding side can grasp a structure of the group layer on the basis of the layer information, the group can be freely set on an encoding side.

In addition, as described above, by indicating the group layer to which the processing target node belongs as a relative value from the group layer to which the parent node belongs, it is possible to suppress an increase in encoding amount due to this layer information.

Note that, when such layer information is signaled, the layer information may be signaled in a parent node as shown in a seventh row (the row of "1-2-1") from the top of the table illustrated in Fig. 4. For example, it is possible to generate and encode layer information in which a group layer of each child node belonging to the processing target node in the reference structure is indicated by a relative value with respect to a group layer of the processing target node.

For example, in a case of the prediction tree in B of Fig. 6, as the layer information of a node (a parent node) corresponding to the point 60, information (+1) indicating a group layer to which a node (a child node) corresponding to the point 61 belongs and information (+0) indicating a group layer to which a node (a child node) corresponding to the point 63 belongs are signaled. Furthermore, as the layer information of a node (a parent node) corresponding to the point 61, information (+1) indicating a group layer to which a node (a child node) corresponding to the point 62 belongs and information (+0) indicating a group layer to which a node (a child node) corresponding to the point 64 belongs are signaled. Similarly, as the layer information of each node, information indicating a group layer of a child node thereof is signaled.

By doing in this way, at a time when the parent node is decoded, the group layer of the child node can be grasped.

Furthermore, as shown in an eighth row (the row of "1-2-2") from the top of the table illustrated in Fig. 4, the layer information may be signaled in a child node. For example, it is possible to generate and encode layer information in which a group layer of a processing target node in the reference structure is indicated by a relative value with respect to a group layer of a parent node to which the processing target node belongs.

For example, in the case of the prediction tree in B of Fig. 6, information (+1) indicating a group layer to which the node corresponding to the point 61 belongs is signaled as the layer information of the node corresponding to the point 61. Furthermore, information (+0) indicating a group layer to which the node corresponding to the point 63 belongs is signaled as the layer information of the node corresponding to the point 63. Similarly, as the layer information of each node, information indicating a group layer of the node is signaled.

By doing in this way, the group layer of the processing target node can be grasped.

Note that, quantization may be performed at a time of encoding various kinds of information such as geometry data (a prediction residual). In the quantization, a quantization step may be controlled for each layer as shown in a ninth row (the row of "1-3") from the top of the table illustrated in Fig. 4. That is, the prediction residual or the like may be quantized and encoded in the quantization step set for each group layer that is a layer according to a group in the reference structure. For example, the quantization step may be changed for each layer.

Furthermore, as shown in a tenth row (the row of "1-3-1") from the top of the table illustrated in Fig. 4, the layer information may be signaled in a child node. The quantization step may be signaled. That is, information indicating the quantization step may be encoded.

Furthermore, at a time of encoding various kinds of information such as geometry data (a prediction residual) as shown in the eleventh row (the row of "1-4") from the top of the table illustrated in Fig. 4, arithmetic encoding may be independently performed for each layer (group layer) as shown in a twelfth row (the row of "1-4-1") from the top of the table illustrated in Fig. 4. That is, the arithmetic encoding may be performed on the prediction residual or the like after classification into each group layer that is a layer according to a group in the reference structure. By doing in this way, coded data can be decoded for each group layer. For example, when some group layers are deleted and transcoded, transcoding can be performed by only selecting coded data of a group layer that is not deleted (without decoding). As a result, it is possible to suppress an increase in load of the transcoding. Note that, in this case, the layer information is only required to be signaled in a parent node.

Note that the arithmetic encoding may be performed independently in units smaller than the group layer. For example, the arithmetic encoding may be independently performed for each branch or each node of the prediction tree.

Furthermore, as shown in a bottom row of the table illustrated in Fig. 4 (the row of "1-4-2"), the arithmetic encoding may be performed without classification for each layer (group layer). That is, the arithmetic encoding may be performed on the prediction residual or the like without classification into each group layer that is a layer according to a group in the reference structure. For example, the arithmetic encoding may be performed without classification of prediction residuals or the like of a plurality of group layers. Furthermore, the arithmetic encoding may be performed without classification of prediction residuals or the like of all the group layers.

Furthermore, whether or not to perform encoding may be selected for each group layer, and the prediction residual or the like of the group layer selected for encoding may be encoded. That is, control as to whether or not to perform encoding (control as to whether or not to delete) may be performed for each group layer.

For example, a spatial resolution of point cloud data to be encoded can be controlled by performing group classification of points such that a density in a three-dimensional space is uniform, and performing encoding control for each group layer in this manner.

Of course, the encoding control may be performed in units smaller than the group layer. For example, whether or not to encode may be selected for each branch of the reference structure, and the prediction residual or the like of a node belonging to the branch selected for encoding may be encoded. That is, control as to whether or not to perform encoding (control as to whether or not to delete) may be performed for each branch. By doing in this way, information about some branches in the group layer can be deleted, and more detailed encoding control can be achieved.

Note that any information unit of this encoding control may be adopted, and the encoding control may be performed for each information unit other than the above-described example, as a matter of course. For example, it is also possible to enable the encoding control to be performed for each of a plurality of information units. For example, the encoding control may be performed for either of each group layer or each branch.

<Encoding device>

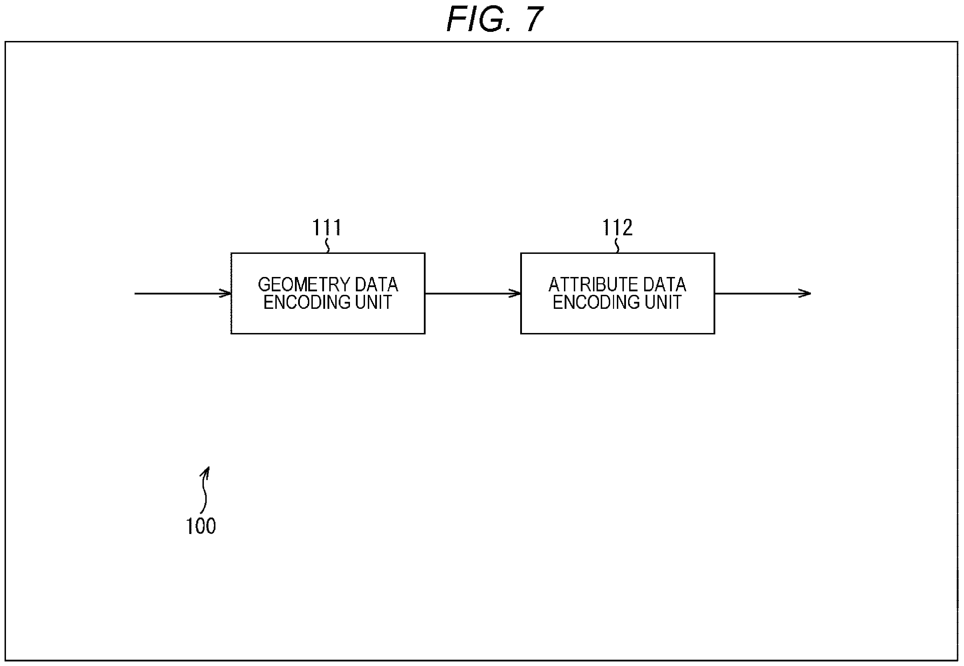

Next, a device to which the present technology described above is applied will be described. Fig. 7 is a block diagram illustrating an example of a configuration of an encoding device, which is one mode of an information processing apparatus to which the present technology is applied. An encoding device 100 illustrated in Fig. 7 is a device that encodes a point cloud (3D data). The encoding device 100 encodes a point cloud by applying the present technology described above with reference to Fig. 4 and the like, for example.

Note that, in Fig. 7, main parts of processing units, data flows, and the like are illustrated, and those illustrated in Fig. 7 are not necessarily all. That is, in the encoding device 100, there may be a processing unit not illustrated as a block in Fig. 7, or there may be a flow of processing or data not illustrated as an arrow or the like in Fig. 7.

As illustrated in Fig. 7, the encoding device 100 includes a geometry data encoding unit 111 and an attribute data encoding unit 112.

The geometry data encoding unit 111 acquires a point cloud (3D data) inputted to the encoding device 100, encodes geometry data (position information) to generate coded data of the geometry data, and supplies the generated coded data of the geometry data and attribute data (attribute information) to the attribute data encoding unit 112.

The attribute data encoding unit 112 acquires the coded data of the geometry data and the attribute data supplied from the geometry data encoding unit 111, encodes the attribute data by using them to generate coded data of the attribute data, and outputs the coded data of the geometry data and the generated coded data of the attribute data to the outside of the encoding device 100 (for example, the decoding side) as coded data of point cloud data.

Note that these processing units (the geometry data encoding unit 111 and the attribute data encoding unit 112) have any configuration. For example, each processing unit may be configured by a logic circuit that implements the above-described processing. Furthermore, each processing unit may have, for example, a central processing unit (CPU), a read only memory (ROM), a random access memory (RAM), and the like, and execute a program by using them to implement the above-described processing. Of course, each processing unit may have both of the configurations, implement a part of the above-described processing by the logic circuit, and implement other by executing the program. The configurations of the processing units may be independent from each other and, for example, some processing units may implement a part of the above-described processing by the logic circuit, some other processing units may implement the above-described processing by executing the program, and still some other processing units may implement the above-described processing by both the logic circuit and the execution of the program.

<Geometry data encoding unit>

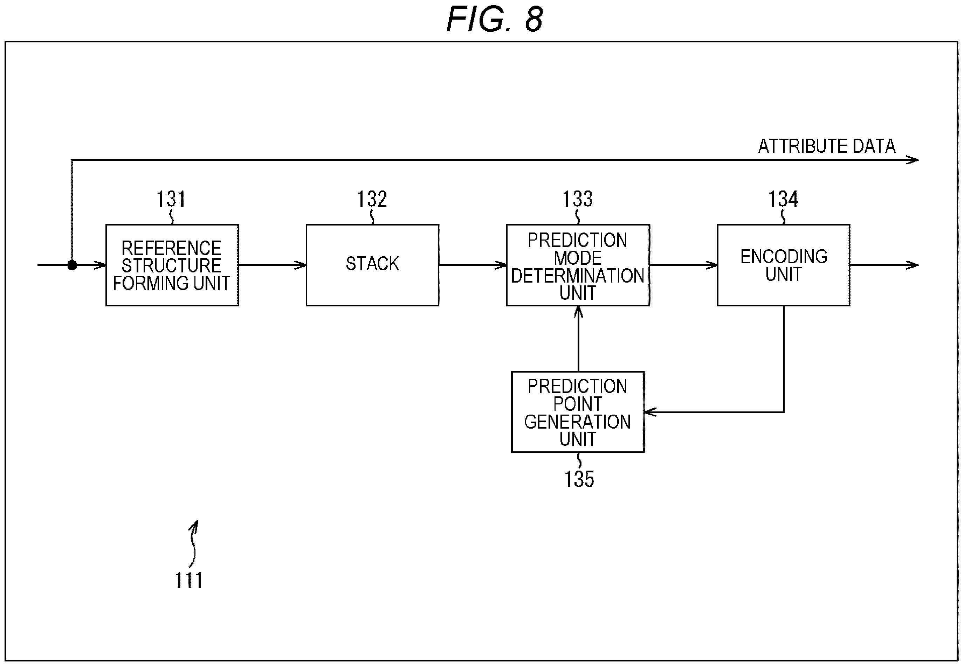

Fig. 8 is a block diagram illustrating a main configuration example of the geometry data encoding unit 111. Note that, in Fig. 8, main parts of processing units, data flows, and the like are illustrated, and those illustrated in Fig. 8 are not necessarily all. That is, in the geometry data encoding unit 111, there may be a processing unit not illustrated as a block in Fig. 8, or there may be a flow of processing or data not illustrated as an arrow or the like in Fig. 8.

As illustrated in Fig. 8, the geometry data encoding unit 111 includes a reference structure forming unit 131, a stack 132, a prediction mode determination unit 133, an encoding unit 134, and a prediction point generation unit 135.

Geometry data of point cloud data supplied to the geometry data encoding unit 111 is supplied to the reference structure forming unit 131. Note that attribute data is not processed in the geometry data encoding unit 111 and is supplied to the attribute data encoding unit 112.

The reference structure forming unit 131 generates a reference structure (prediction tree) in encoding of a point cloud for the supplied geometry data. At that time, the reference structure forming unit 131 can apply various methods as described above with reference to the table of Fig. 4, to form a reference structure subjected to group layering. Furthermore, the reference structure forming unit 131 generates, for each point, layer information indicating the formed reference structure. The reference structure forming unit 131 supplies the geometry data, the layer information, and the like of a processing target point to the stack 132 in accordance with the formed reference structure. At that time, the reference structure forming unit 131 can apply various methods as described above with reference to the table of Fig. 4.

For example, the reference structure forming unit 131 may determine whether or not to encode a child node in the reference structure (prediction tree) formed by the reference structure forming unit 131 in accordance with encoding control by a user or the like, and may supply the geometry data, the layer information, and the like of the child node of the processing target node to the stack 132 when it is determined to perform encoding. For example, the reference structure forming unit 131 may select whether or not to encode the prediction residual or the like for each group layer, and supply the prediction residual or the like of a node belonging to the group layer to the stack 132. Furthermore, the reference structure forming unit 131 may select whether or not to encode the prediction residual or the like for each branch of the reference structure, and supply the prediction residual or the like of a node belonging to the branch to the stack 132. By doing in this way, the geometry data can be encoded only for some points.

The stack 132 holds information in a last-in first-out method. For example, the stack 132 holds the geometry data, the layer information, and the like of each point supplied from the reference structure forming unit 131. Furthermore, the stack 132 supplies information most recently held among the held information to the prediction mode determination unit 133, in response to a request from the prediction mode determination unit 133.

The prediction mode determination unit 133 performs processing related to determination of a prediction mode (a prediction point). For example, the prediction mode determination unit 133 acquires the geometry data, the layer information, and the like of a point most recently held in the stack 132. Furthermore, the prediction mode determination unit 133 acquires the geometry data and the like of the prediction point of the point from the prediction point generation unit 135. When there is a plurality of prediction points corresponding to the processing target point as in the example of Fig. 2, all the prediction points are acquired. Then, the prediction mode determination unit 133 determines the prediction point (that is, the prediction mode) to be applied. At that time, the prediction mode determination unit 133 can apply various methods as described above with reference to the table of Fig. 4.

For example, for each prediction point, the prediction mode determination unit 133 derives a prediction residual which is a difference between geometry data (a prediction value) of each prediction point and geometry data of a processing target point, and compares the values. By such comparison, the prediction mode (the prediction method) to be applied is selected. For example, a prediction point closest to the processing target point is selected. The prediction mode determination unit 133 supplies information regarding each point (for example, a prediction residual, layer information, and the like of the selected prediction mode) to the encoding unit 134.

The encoding unit 134 acquires and encodes the information (for example, a prediction residual, layer information, and the like of the selected prediction mode) supplied by the prediction mode determination unit 133, to generate coded data.

At that time, the encoding unit 134 can apply various methods as described above with reference to the table of Fig. 4. For example, the encoding unit 134 can perform quantization and encoding in the quantization step set for each group layer. Furthermore, the encoding unit 134 can encode and signal information indicating the quantization step. Moreover, the encoding unit 134 can also perform arithmetic encoding with the prediction residual or the like being classified for each group layer, or can perform arithmetic encoding without classification of the prediction residual or the like for each group layer.

The encoding unit 134 supplies the generated coded data to the attribute data encoding unit 112 as coded data of geometry data. Furthermore, the encoding unit 134 supplies information such as geometry data of the processing target point to the prediction point generation unit 135.

The prediction point generation unit 135 performs processing related to generation of a prediction point, that is, derivation of a prediction value. For example, the prediction point generation unit 135 acquires information such as geometry data of the processing target point supplied from the encoding unit 134. Furthermore, the prediction point generation unit 135 derives geometry data (for example, a prediction value of geometry data of a child node of the processing target node) of a prediction point that can be generated by using the geometry data and the like of the processing target point. At that time, the prediction point generation unit 135 can apply various methods as described above with reference to the table of Fig. 4. The prediction point generation unit 135 supplies the derived prediction value to the prediction mode determination unit 133 as necessary.

<Reference structure forming unit>

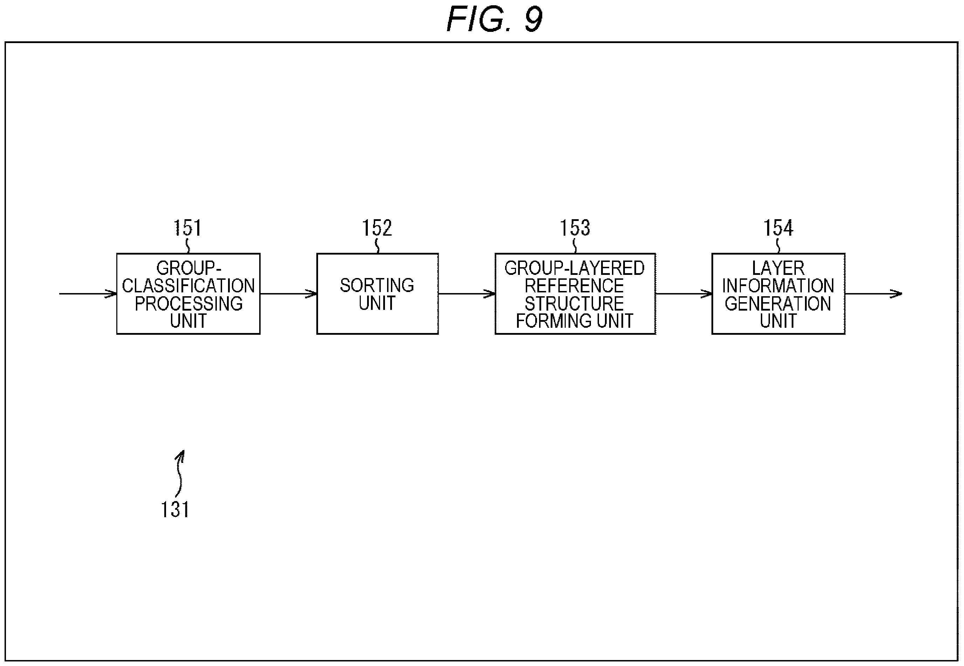

Fig. 9 is a block diagram illustrating a main configuration example of the reference structure forming unit 131. Note that, in Fig. 9, main parts of processing units, data flows, and the like are illustrated, and those illustrated in Fig. 9 are not necessarily all. That is, in the reference structure forming unit 131, there may be a processing unit not illustrated as a block in Fig. 9, or there may be a flow of processing or data not illustrated as an arrow or the like in Fig. 9.

As illustrated in Fig. 9, the reference structure forming unit 131 includes a group-classification processing unit 151, a sorting unit 152, a group-layered reference structure forming unit 153, and a layer information generation unit 154.

The group-classification processing unit 151 performs processing related to group classification. For example, the group-classification processing unit 151 performs group classification of points for geometry data supplied to the reference structure forming unit 131. At that time, the group-classification processing unit 151 can apply various methods as described above with reference to the table of Fig. 4. For example, the group-classification processing unit 151 may perform the group classification in accordance with positions of the points. Furthermore, the group-classification processing unit 151 may perform the group classification in accordance with features of the point. The group-classification processing unit 151 supplies geometry data of the individual points subjected to group classification, to the sorting unit 152.

The sorting unit 152 performs processing related to rearrangement of points. For example, the sorting unit 152 acquires geometry data that is of the individual points subjected to group classification and is supplied from the group-classification processing unit 151. Then, the sorting unit 152 rearranges the geometry data of individual points. At that time, the sorting unit 152 can apply various methods as described above with reference to the table of Fig. 4. For example, the sorting unit 152 rearranges the geometry data of the individual points subjected to group classification by the group-classification processing unit 151, to be put together for each group. The sorting unit 152 supplies the geometry data of the individual sorted points to the group-layered reference structure forming unit 153.

The group-layered reference structure forming unit 153 performs processing related to formation of a reference structure. For example, the group-layered reference structure forming unit 153 acquires the geometry data of the individual sorted points supplied from the sorting unit 152. The group-layered reference structure forming unit 153 forms a reference structure. At that time, the group-layered reference structure forming unit 153 can apply various methods as described above with reference to the table of Fig. 4. For example, the group-layered reference structure forming unit 153 sets a reference destination of each point in accordance with the sorted arrangement order supplied from the sorting unit 152, to form a reference structure subjected to group layering. Any forming method may be adopted for this reference structure. The group-layered reference structure forming unit 153 supplies the reference structure formed in such a way, to the layer information generation unit 154.

The layer information generation unit 154 acquires the reference structure supplied from the group-layered reference structure forming unit 153. The layer information generation unit 154 generates layer information indicating the reference structure. At that time, the layer information generation unit 154 can apply various methods as described above with reference to the table of Fig. 4. For example, the layer information generation unit 154 may generate and signal, as the layer information of the processing target node, information (for example, a relative value with respect to a group layer of the processing target node) indicating a group layer of each child node belonging to the processing target node in the reference structure. Furthermore, the layer information generation unit 154 may generate and signal, as the layer information of the processing target node, information (for example, a relative value with respect to a group layer of a parent node to which the processing target node belongs) indicating the group layer of the processing target node in the reference structure. The layer information generation unit 154 supplies the generated layer information to the stack 132 (Fig. 8).

By having the above configuration, the encoding device 100 can perform group layering on the reference structure of the geometry data. Therefore, as described above, the encoding device 100 can suppress an increase in load of the encoding process. Furthermore, a bit rate of coded data of geometry data generated by the encoding can be controlled. In addition, a storage capacity at a time of storing the coded data and a transmission rate at a time of transmitting the coded data can be controlled.

<Flow of encoding process>

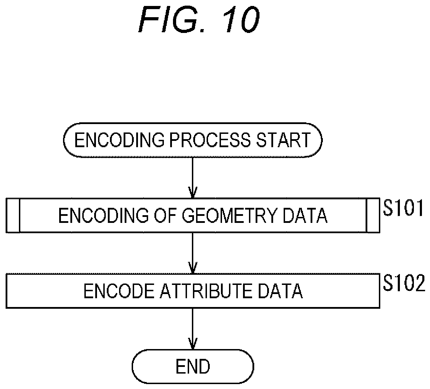

Next, processing executed by this encoding device 100 will be described. This encoding device 100 encodes data of a point cloud by executing an encoding process. An example of a flow of this encoding process will be described with reference to a flowchart of Fig. 10.

When the encoding process is started, in step S101, the geometry data encoding unit 111 of the encoding device 100 encodes geometry data of inputted point cloud by executing a geometry data encoding process, to generate coded data of the geometry data.

In step S102, the attribute data encoding unit 112 encodes attribute data of the inputted point cloud, to generate coded data of the attribute data.

When the processing in step S102 ends, the encoding process ends.

<Flow of geometry data encoding process>

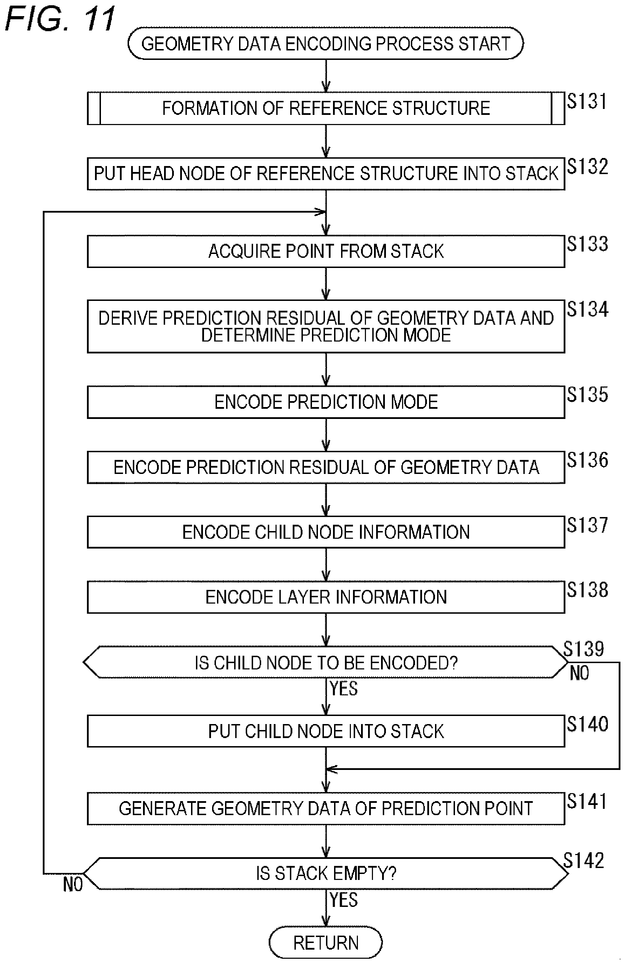

Next, an example of a flow of the geometry data encoding process executed in step S101 of Fig. 10 will be described with reference to a flowchart of Fig. 11.

When the geometry data encoding process is started, in step S131, the reference structure forming unit 131 executes a reference structure forming process to form a reference structure (prediction tree) of geometry data. Note that the reference structure forming unit 131 also generates layer information corresponding to the formed reference structure.

In step S132, the reference structure forming unit 131 stores, in the stack 132, geometry data and the like of a head node of the reference structure formed in step S131.

In step S133, the prediction mode determination unit 133 acquires geometry data and the like of a most recently stored point (node) from the stack 132.

In step S134, the prediction mode determination unit 133 sets, as a processing target, a point for which the information is acquired in step S133, derives a prediction residual of geometry data for the processing target point, and determines a prediction mode.

In step S135, the encoding unit 134 encodes the prediction mode determined in step S134. Furthermore, in step S136, the encoding unit 134 encodes the prediction residual of the geometry data in the prediction mode determined in step S134. Moreover, in step S137, the encoding unit 134 encodes child node information indicating whether a child node of the processing target node is a node of a degree. Furthermore, in step S138, the encoding unit 134 encodes the layer information generated in step S131. The encoding unit 134 supplies coded data of these pieces of information to the attribute data encoding unit 112 as coded data of the geometry data.

In step S139, the reference structure forming unit 131 determines whether or not to encode the child node of the processing target node, on the basis of encoding control by the user or the like. When it is determined to encode, the process proceeds to step S140.

In step S140, the reference structure forming unit 131 stores geometry data and the like of the child node in the stack 132. When the process of step S140 ends, the process proceeds to step S141. Whereas, when it is determined in step S139 not to encode the child node, the process of step S140 is skipped, and the process proceeds to step S141.

In step S141, the prediction point generation unit 135 generates geometry data of a prediction point that can be generated by using the geometry data of the processing target point.

In step S142, the prediction mode determination unit 133 determines whether or not the stack 132 is empty. When it is determined that the stack 132 is not empty (that is, information about at least one or more points is stored), the process returns to step S133. That is, the processing of steps S133 to S142 is executed on a point most recently stored in the stack 132 as the processing target.

Such a process is repeated, and when it is determined in step S142 that the stack is empty, the geometry data encoding process ends, and the process returns to Fig. 10.

<Flow of reference structure forming process>

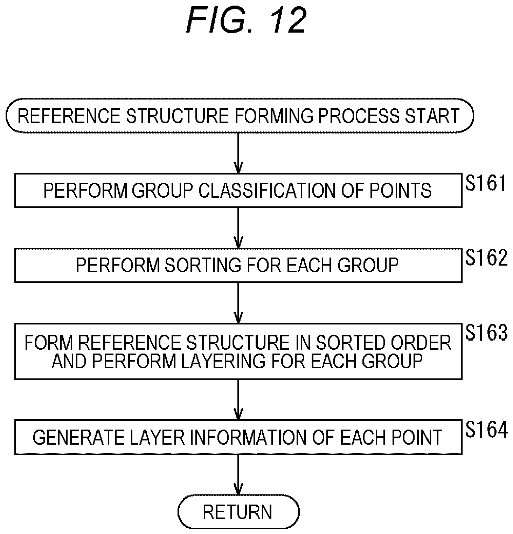

Next, an example of a flow of the reference structure forming process executed in step S131 of Fig. 11 will be described with reference to a flowchart of Fig. 12.

When the reference structure forming process is started, in step S161, the group-classification processing unit 151 performs group classification of individual points of a point cloud.

In step S162, the sorting unit 152 rearranges a processing order of the points of the point cloud so as to be arranged for each group set in step S161.

In step S163, the group-layered reference structure forming unit 153 forms a reference destination of each point in the order sorted in step S163, to form a reference structure subjected to group layering.

In step S164, the layer information generation unit 154 forms layer information of each point.

When the processing of step S164 ends, the reference structure forming process ends, and the process returns to Fig. 11.

By executing various processes as described above, the encoding device 100 can perform group layering on the reference structure of the geometry data. Therefore, as described above, the encoding device 100 can suppress an increase in load of the encoding process. Furthermore, a bit rate of coded data of geometry data generated by the encoding can be controlled. In addition, a storage capacity at a time of storing the coded data and a transmission rate at a time of transmitting the coded data can be controlled.

<Decoding device>

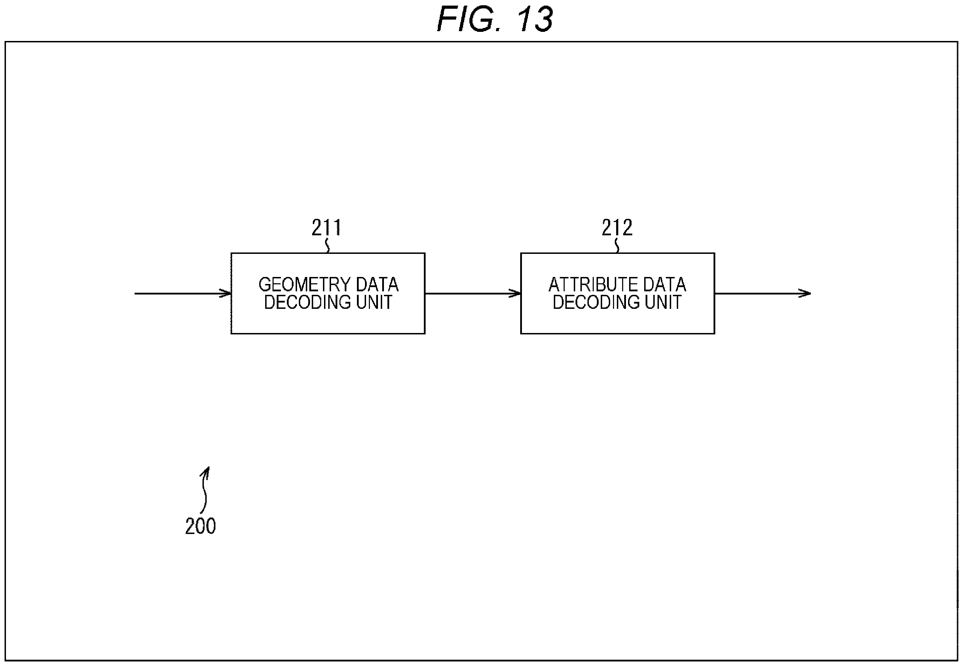

Fig. 13 is a block diagram illustrating an example of a configuration of a decoding device, which is one mode of an information processing apparatus to which the present technology is applied. A decoding device 200 illustrated in Fig. 13 is a device that decodes coded data of a point cloud (3D data). The decoding device 200 decodes, for example, coded data of a point cloud generated in the encoding device 100.

Note that, in Fig. 13, main parts of processing units, data flows, and the like are illustrated, and those illustrated in Fig. 13 are not necessarily all. That is, in the decoding device 200, there may be a processing unit not illustrated as a block in Fig. 13, or there may be a flow of processing or data not illustrated as an arrow or the like in Fig. 13.

As illustrated in Fig. 13, the decoding device 200 includes a geometry data decoding unit 211 and an attribute data decoding unit 212.

The geometry data decoding unit 211 acquires coded data of a point cloud (3D data) inputted to the encoding device 100, decodes coded data of geometry data to generate the geometry data, and supplies the generated geometry data and coded data of attribute data to the attribute data decoding unit 212.

The attribute data decoding unit 212 acquires the geometry data and the coded data of the attribute data that are supplied from the geometry data decoding unit 211. Furthermore, the attribute data decoding unit 212 decodes the coded data of the attribute data by using the geometry data to generate the attribute data, and outputs the geometry data and the generated attribute data to the outside of the decoding device 200 as point cloud data.

Note that these processing units (the geometry data decoding unit 211 and the attribute data decoding unit 212) have any configuration. For example, each processing unit may be configured by a logic circuit that implements the above-described processing. Furthermore, each of the processing units may include, for example, a CPU, a ROM, a RAM, and the like, and execute a program by using them to implement the above-described processing. Of course, each processing unit may have both of the configurations, implement a part of the above-described processing by the logic circuit, and implement other by executing the program. The configurations of the processing units may be independent from each other and, for example, some processing units may implement a part of the above-described processing by the logic circuit, some other processing units may implement the above-described processing by executing the program, and still some other processing units may implement the above-described processing by both the logic circuit and the execution of the program.

<Geometry data decoding unit>

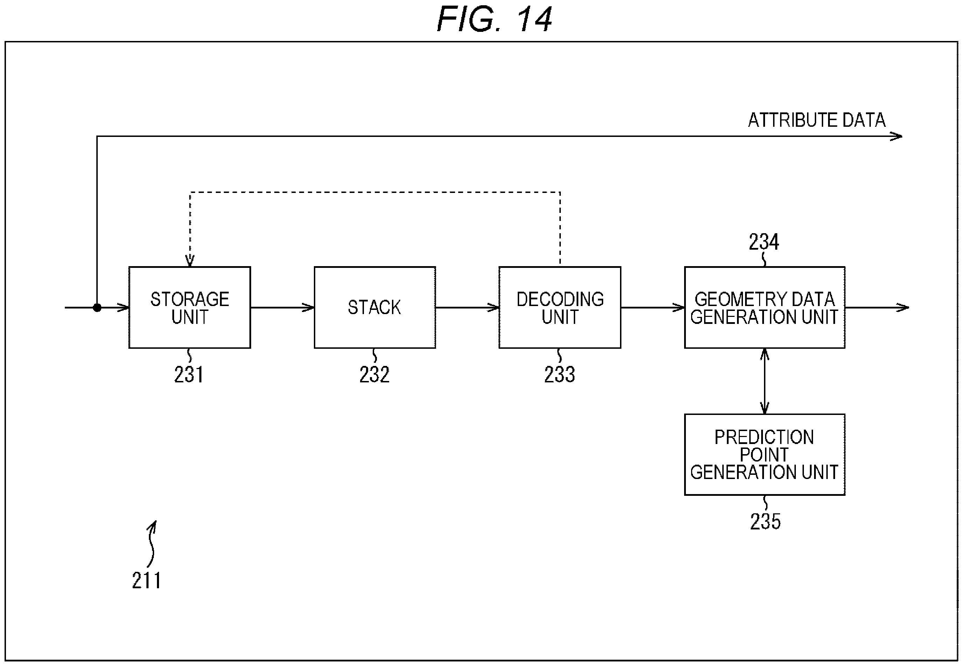

Fig. 14 is a block diagram illustrating a main configuration example of the geometry data decoding unit 211. Note that, in Fig. 14, main parts of processing units, data flows, and the like are illustrated, and those illustrated in Fig. 14 are not necessarily all. That is, in the geometry data decoding unit 211, there may be a processing unit not illustrated as a block in Fig. 14, or there may be a flow of processing or data not illustrated as an arrow or the like in Fig. 14.

As illustrated in Fig. 14, the geometry data decoding unit 211 includes a storage unit 231, a stack 232, a decoding unit 233, a geometry data generation unit 234, and a prediction point generation unit 235.

Coded data of geometry data supplied to the geometry data decoding unit 211 is supplied to the storage unit 231. Note that coded data of attribute data is not processed in the geometry data decoding unit 211 and is supplied to the attribute data decoding unit 212.

The storage unit 231 stores the coded data of the geometry data supplied to the geometry data decoding unit 211. Furthermore, the storage unit 231 supplies, to the stack 232, coded data of geometry data of a point to be decoded under control of the decoding unit 233. At that time, the storage unit 231 can apply various methods as described above with reference to the table of Fig. 4.

The stack 232 holds information in a last-in first-out method. For example, the stack 232 holds coded data of each point supplied from the storage unit 231. Furthermore, the stack 232 supplies information most recently held among the held information to the decoding unit 233, in response to a request from the decoding unit 233.

The decoding unit 233 performs processing related to decoding of coded data of geometry data. For example, the decoding unit 233 acquires coded data of a point most recently held in the stack 232. Furthermore, the decoding unit 233 decodes the acquired coded data to generate the geometry data (a prediction residual or the like). At that time, the decoding unit 233 can apply various methods as described above with reference to the table of Fig. 4. The decoding unit 233 supplies the generated geometry data (prediction residual or the like) to the geometry data generation unit 234.

Furthermore, the decoding unit 233 can perform decoding control so as to decode only some coded data requested by the user or the like, for example. For example, the decoding unit 233 can control whether or not to perform decoding, for each group layer. Furthermore, the decoding unit 233 can control whether or not to perform decoding, for each branch of the reference structure. Then, the decoding unit 233 can control the storage unit 231 to store, in the stack 232, only coded data of the point to be decoded. Such decoding control allows the decoding unit 233 to achieve scalable decoding of geometry data.

That is, on the basis of layer information indicating a group layer that is a layer according to a group in the reference structure of geometry data in encoding of a point cloud, in which the reference structure is layered according to groups into which points of the point cloud representing a three-dimensional shaped object as a set of the points are classified, the decoding unit 233 may decode coded data corresponding to a group layer that is desired among coded data obtained by encoding a prediction residual that is a difference between geometry data of each point and a prediction value of the geometry data, in which the prediction residual is derived on the basis of a reference structure.

The geometry data generation unit 234 performs processing related to generation of geometry data. For example, the geometry data generation unit 234 acquires information such as a prediction residual supplied from the decoding unit 233. Furthermore, the geometry data generation unit 234 acquires a prediction point (that is, a prediction value of geometry data of the processing target point) corresponding to the processing target point, from the prediction point generation unit 235. Then, the geometry data generation unit 234 generates geometry data of the processing target point, by using the acquired prediction residual and prediction value (for example, by adding both). The geometry data generation unit 234 supplies the generated geometry data to the attribute data decoding unit 212.

The prediction point generation unit 235 performs processing related to generation of a prediction point, that is, derivation of a prediction value. For example, the prediction point generation unit 235 acquires information such as the geometry data of the processing target point generated in the geometry data generation unit 234. Furthermore, the prediction point generation unit 235 derives geometry data (for example, a prediction value of geometry data of a child node of the processing target node) of a prediction point that can be generated by using the geometry data and the like of the processing target point. At that time, the prediction point generation unit 235 can apply various methods as described above with reference to the table of Fig. 4. For example, the prediction point generation unit 235 can generate a prediction point similarly to a case of the prediction point generation unit 135 of the encoding device 100. The prediction point generation unit 235 supplies the derived prediction value to the geometry data generation unit 234 as necessary.

By having the above configuration, the decoding device 200 can decode the coded data by using a grouped reference structure of geometry data. Therefore, as described above, the decoding device 200 can achieve scalable decoding and suppress an increase in load of the decoding process.

<Flow of decoding process>

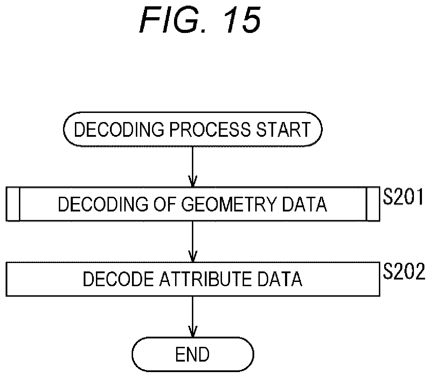

Next, processing executed by this decoding device 200 will be described. This decoding device 200 decodes coded data of a point cloud by executing a decoding process. An example of a flow of this decoding process will be described with reference to a flowchart of Fig. 15.

When the decoding process is started, the geometry data decoding unit 211 of the decoding device 200 executes a geometry data decoding process in step S201 to decode coded data of geometry data of an inputted point cloud, to generate the geometry data.

In step S202, the attribute data decoding unit 212 encodes coded data of attribute data of the inputted point cloud, to generate the attribute data.

When the processing in step S202 ends, the decoding process ends.

<Flow of geometry data decoding process>

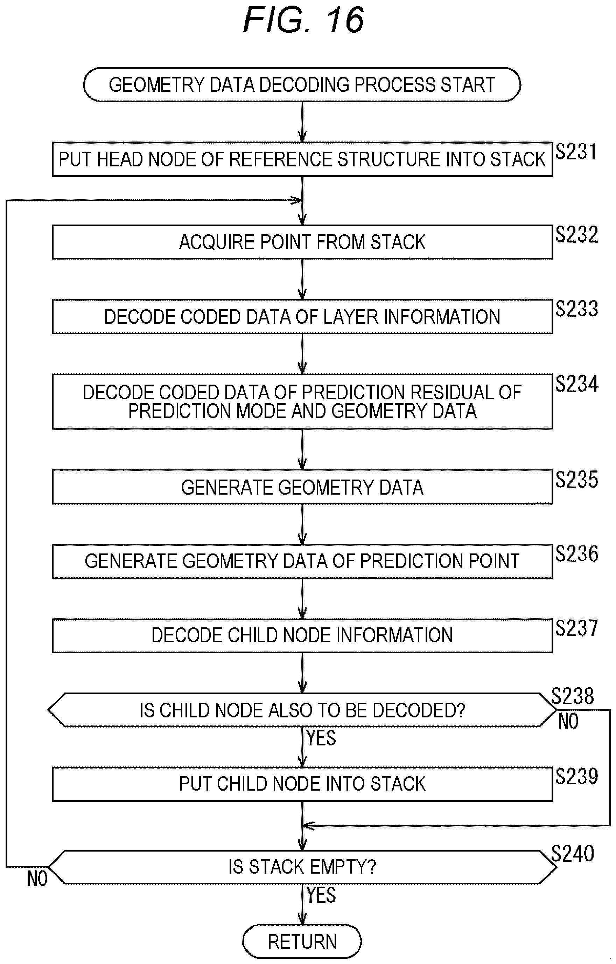

Next, an example of a flow of the geometry data decoding process executed in step S201 of Fig. 15 will be described with reference to a flowchart of Fig. 16.

When the geometry data decoding process is started, in step S231, the storage unit 231 stores supplied coded data of the geometry data, and stores, in the stack 232, coded data of a head node of the reference structure (prediction tree) of the geometry data.

In step S232, the decoding unit 233 acquires coded data of a most recently stored point (node) from the stack 232.

In step S233, the decoding unit 233 decodes the coded data acquired in step S232 to generate layer information. Furthermore, in step S234, the decoding unit 233 decodes the coded data acquired in step S232, and generates a prediction residual of the prediction mode and the geometry data.

In step S235, the geometry data generation unit 234 generates geometry data of the processing target node by using the prediction residual generated in step S234 and a prediction value of the processing target node (for example, by adding both).

In step S236, the prediction point generation unit 235 generates geometry data (that is, a prediction value) of a prediction point that can be generated by using the geometry data of the processing target node.

In step S237, the decoding unit 233 decodes the coded data acquired in step S232 and generates child node information.

In step S238, the decoding unit 233 determines whether or not to also decode the child node on the basis of the child node information, the layer information, and the like in accordance with decoding control of the user or the like. When it is determined to also decode the child node, the process proceeds to step S239.

In step S239, the decoding unit 233 controls the storage unit 231 to store coded data of the child node in the stack 232. When the process of step S239 ends, the process proceeds to step S240. Whereas, when it is determined in step S238 not to decode the child node, the process of step S239 is skipped, and the process proceeds to step S240.

In step S240, the decoding unit 233 determines whether or not the stack 232 is empty. When it is determined that the stack 232 is not empty (that is, information about at least one or more points is stored), the process returns to step S232. That is, the processing of steps S232 to S240 is executed on a point most recently stored in the stack 232 as the processing target.

Such a process is repeated, and when it is determined in step S240 that the stack is empty, the geometry data decoding process ends, and the process returns to Fig. 15.

By executing various processes as described above, the decoding device 200 can decode coded data by using a grouped reference structure of geometry data. Therefore, as described above, the decoding device 200 can achieve scalable decoding and suppress an increase in load of the decoding process.

<Transcoder>

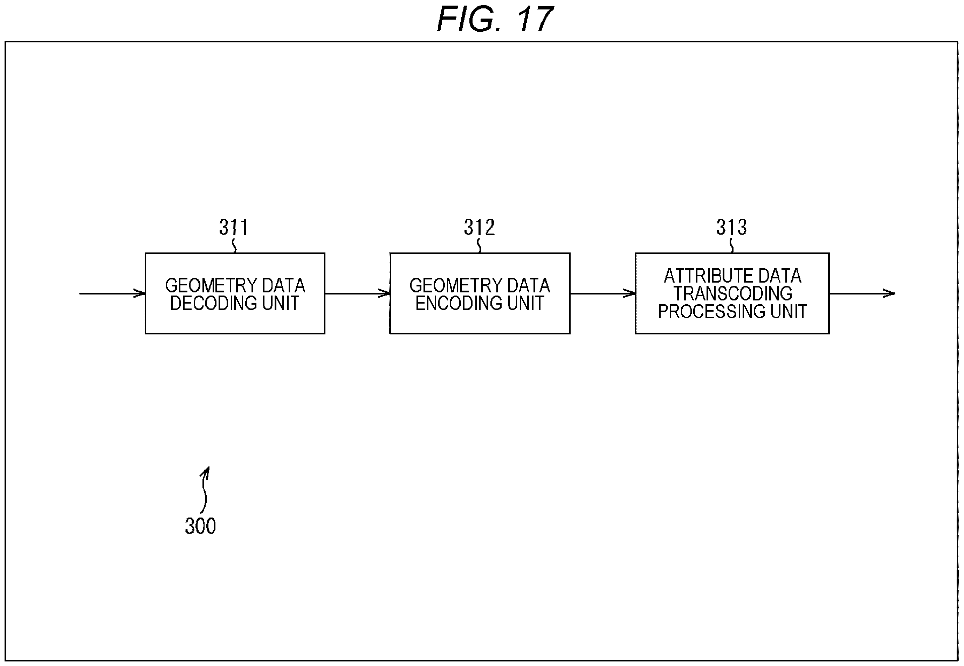

Fig. 17 is a block diagram illustrating an example of a configuration of a transcoder, which is one mode of an information processing apparatus to which the present technology is applied. A transcoder 300 illustrated in Fig. 17 is a device that decodes coded data of a point cloud (3D data), and re-encodes the coded data by performing, for example, parameter conversion or the like. The transcoder 300 transcodes (decodes and encodes) coded data of a point cloud generated in the encoding device 100, for example.

Note that, in Fig. 17, main parts of processing units, data flows, and the like are illustrated, and those illustrated in Fig. 17 are not necessarily all. That is, in the transcoder 300, there may be a processing unit not illustrated as a block in Fig. 17, or there may be a flow of processing or data not illustrated as an arrow or the like in Fig. 17.

As illustrated in Fig. 17, the transcoder 300 includes a geometry data decoding unit 311, a geometry data encoding unit 312, and an attribute data transcoding processing unit 313.

The geometry data decoding unit 311 acquires coded data of point cloud data inputted to the transcoder 300. The geometry data decoding unit 311 decodes the coded data to generate geometry data. At that time, the geometry data decoding unit 311 can apply various methods as described above with reference to the table of Fig. 4. For example, the geometry data decoding unit 311 may have a configuration similar to that of the geometry data decoding unit 211 of the decoding device 200, and perform similar processing. That is, the geometry data decoding unit 311 may achieve scalable decoding. The geometry data decoding unit 311 supplies coded data of attribute data and the generated geometry data, to the geometry data encoding unit 312.

The geometry data encoding unit 312 acquires the coded data of the attribute data and the geometry data that are supplied from the geometry data decoding unit 311. The geometry data encoding unit 312 re-encodes the geometry data to generate coded data of the geometry data. At that time, the geometry data encoding unit 312 can apply various methods as described above with reference to the table of Fig. 4. For example, the geometry data encoding unit 312 may have a configuration similar to that of the geometry data encoding unit 111 of the encoding device 100, and perform similar processing. That is, the geometry data encoding unit 312 may perform group layering on a reference structure of the geometry data. Furthermore, after determining the reference structure, the geometry data encoding unit 312 can also reduce the number of points for encoding. That is, the geometry data encoding unit 312 may be able to control a bit rate of coded data to be generated. The geometry data encoding unit 312 supplies the coded data of the attribute data and the generated coded data of the geometry data, to the attribute data transcoding processing unit 313.

Note that changing of parameters of the geometry data, such as, for example, reducing the number of points or the like (by scalable decoding) may be performed in the geometry data decoding unit 311, may be performed in the geometry data encoding unit 312, or may be performed in both.

The attribute data transcoding processing unit 313 performs processing related to transcoding of attribute data. For example, the attribute data transcoding processing unit 313 acquires the coded data of the geometry data and the coded data of the attribute data that are supplied from the geometry data encoding unit 312. Furthermore, the attribute data transcoding processing unit 313 decodes and re-encodes (transcodes) the acquired coded data of the attribute data by a predetermined method. The attribute data transcoding processing unit 313 outputs the coded data of the geometry data and the generated coded data of the attribute data to the outside of the transcoder 300 as a transcoding result.

By having the above configuration, the transcoder 300 can reduce the number of points at a time of transcoding. That is, the transcoder 300 can suppress an increase in load of the transcoding. Furthermore, the transcoder 300 can control a bit rate of coded data of geometry data generated by the transcoding.

Note that these processing units (the geometry data decoding unit 311 to the attribute data transcoding processing unit 313) have any configuration. For example, each processing unit may be configured by a logic circuit that implements the above-described processing. Furthermore, each of the processing units may include, for example, a CPU, a ROM, a RAM, and the like, and execute a program by using them to implement the above-described processing. Of course, each processing unit may have both of the configurations, implement a part of the above-described processing by the logic circuit, and implement other by executing the program. The configurations of the processing units may be independent from each other and, for example, some processing units may implement a part of the above-described processing by the logic circuit, some other processing units may implement the above-described processing by executing the program, and still some other processing units may implement the above-described processing by both the logic circuit and the execution of the program.

<Flow of transcoding process>

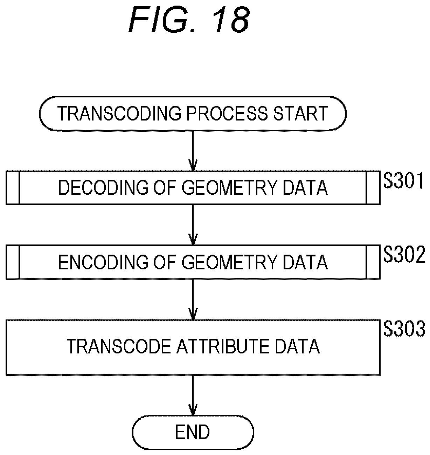

Next, processing executed by this transcoder 300 will be described. This transcoder 300 transcodes coded data of a point cloud by executing a transcoding process. An example of a flow of this transcoding process will be described with reference to a flowchart of Fig. 18.

When the transcoding process is started, the geometry data decoding unit 311 of the transcoder 300 executes a geometry data decoding process in step S301 to decode coded data, to generate geometry data. For example, the geometry data decoding unit 311 can perform this geometry data decoding process in a flow similar to the geometry data decoding process described with reference to the flowchart of Fig. 16.

In step S302, the geometry data encoding unit 312 executes a geometry data encoding process to encode the geometry data, to generate coded data. For example, the geometry data encoding unit 312 can perform this geometry data encoding process in a flow similar to the geometry data encoding process described with reference to the flowchart of Fig. 11.

In step S303, the attribute data transcoding processing unit 313 transcodes attribute data. When the process of step S303 ends, the transcoding process ends.

By executing each process as described above, the transcoder 300 can reduce the number of points at a time of transcoding. That is, the transcoder 300 can suppress an increase in load of the transcoding. Furthermore, the transcoder 300 can control a bit rate of coded data of geometry data generated by the transcoding.

<2. Second embodiment>

<Prediction residual encoding of attribute data>

Meanwhile, in a case of the predictive geometry coding described in Non Patent Document 2, a processing target has been geometry data, and attribute data has been encoded by another method. Therefore, it has been necessary to apply mutually different encoding/decoding methods to the geometry data and the attribute data, and there has been a possibility of an increase in cost.

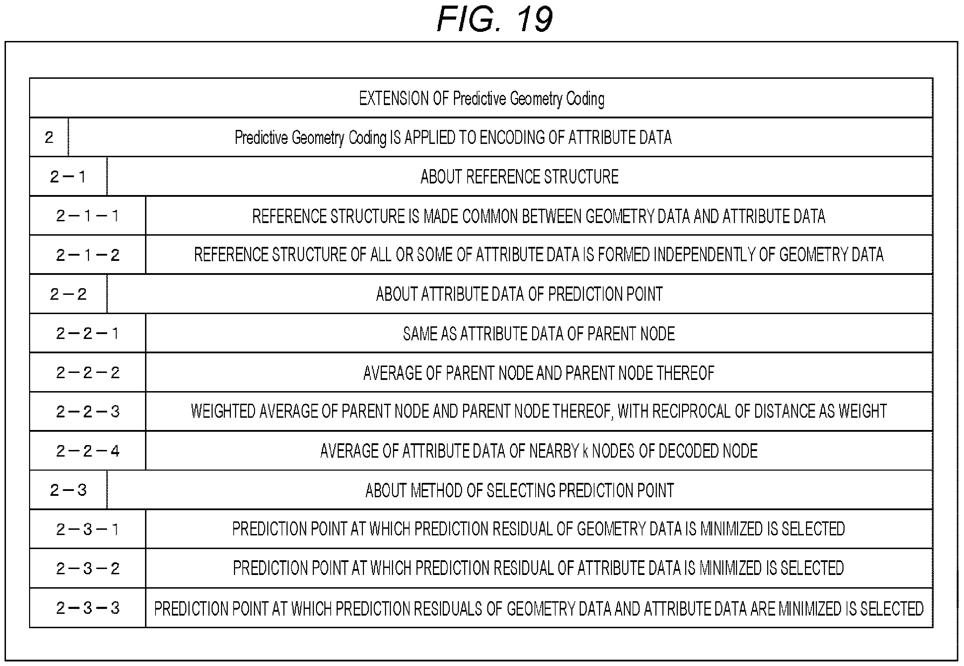

Therefore, predictive geometry coding is extended as shown in a top row of a table illustrated in Fig. 19, and the predictive geometry coding is applied to encoding of attribute data as shown in a second row (the row of "2") from the top in the table illustrated in Fig. 19.

For example, a reference structure of attribute data in encoding of a point cloud representing a three-dimensional shaped object as a set of points is formed. On the basis of the formed reference structure, for each point, a prediction value of the attribute data is derived and a prediction residual that is a difference between the attribute data and the prediction value is derived. The derived prediction residual of the attribute data of each point is encoded.

For example, in the information processing apparatus, there are provided: a reference structure forming unit configured to form a reference structure of attribute data in encoding of a point cloud representing a three-dimensional shaped object as a set of points; a prediction residual derivation unit configured to derive a prediction value of the attribute data and derive a prediction residual that is a difference between the attribute data and the prediction value, for each point on the basis of the reference structure formed by the reference structure forming unit; and an encoding unit configured to encode the prediction residual of the attribute data of each point, in which the prediction residual is derived by the prediction residual derivation unit.

As described above, by applying a method similar to the predictive geometry coding to encoding of attribute data, it is possible to obtain an effect similar to that in the case of geometry data, in the encoding of the attribute data. For example, since the prediction residual is encoded, it is possible to suppress an increase in encoding amount of coded data of attribute data. In addition, a storage capacity at a time of storing the coded data and a transmission rate at a time of transmitting the coded data can be controlled. That is, a coded data bit rate of the attribute data can be controlled.

Note that, as shown in a third row (the row of "2-1") from the top of the table illustrated in Fig. 19, for the reference structure of the attribute data in that case, the reference structure may be made common between the geometry data and the attribute data, as shown in a fourth row (the row of "2-1-1") from the top of the table illustrated in Fig. 19.

For example, a reference structure applied in the predictive geometry coding (that is, encoding of geometry data) may also be applied to encoding of attribute data. By doing in this way, it is no longer necessary to form the reference structure of the attribute data, which makes it possible to suppress an increase in load of the encoding process. Furthermore, since the reference structure is made common between the geometry data and the attribute data, scalable decoding of point cloud data (geometry data and attribute data) becomes possible. Therefore, an increase in load of the decoding process can be suppressed. Furthermore, decoding with lower delay becomes possible.

When the reference structure is made common between the geometry data and the attribute data in this manner, the reference structure may be formed on the basis of the geometry data, the reference structure may be formed on the basis of the attribute data, or the reference structure may be formed on the basis of both the geometry data and the attribute data.

Furthermore, as shown in a fifth row (the row of "2-1-2") from the top of the table illustrated in Fig. 19, a reference structure of all or some of the attribute data may be formed independently of the reference structure of the geometry data. For example, a parameter related to a color (RGB) of the attribute data may have a reference structure common to the geometry data, and a parameter of a reflectance and the like of the attribute data may be formed independently of the reference structure of the geometry data.

Furthermore, as shown in a sixth row (the row of "2-2") from the top of the table illustrated in Fig. 19, attribute data of a prediction point of the processing target node may be the same as attribute data of a parent node of the processing target node as shown in a seventh row (the row of "2-2-1") from the top of the table illustrated in Fig. 19.

Furthermore, as shown in an eighth row (the row of "2-2-2") from the top of the table illustrated in Fig. 19, attribute data of a prediction point of the processing target node may be an average of attribute data with a parent node of the processing target node and attribute data of a parent node of the parent node. Moreover, as shown in a ninth row (the row of "2-2-3") from the top of the table illustrated in Fig. 19, attribute data of a prediction point of the processing target node may be a weighted average of attribute data with a parent node of the processing target node and attribute data of a parent node of the parent node, with a reciprocal of a distance between points corresponding to those nodes as a weight. Furthermore, as shown in a tenth row (the row of "2-2-4") from the top of the table illustrated in Fig. 19, attribute data of a prediction point of the processing target node may be an average of attribute data of nearby k nodes of a decoded node.

Furthermore, as shown in an eleventh row from the top (the row of "2-3") of the table illustrated in Fig. 19, regarding a method of selecting the prediction point, a prediction point at which a prediction residual of geometry data is minimized may be selected, as shown in a twelfth row (the row of "2-3-1") from the top of the table illustrated in Fig. 19. Furthermore, as shown in a thirteenth row (the row of "2-3-2") from the top of the table illustrated in Fig. 19, a prediction point at which a prediction residual of attribute data is minimized may be selected.

Moreover, as shown in a bottom row (the row of "2-3-3") of the table illustrated in Fig. 19, a prediction point at which a prediction residual of geometry data and attribute data is minimized may be selected.

For example, as in Equation (1) below, each prediction residual of each variable (an x coordinate, a y coordinate, and a z coordinate) of geometry data and each variable (a color, a reflectance, or the like) of attribute data may be set as a variable of an evaluation function f (), and the prediction point may be selected on the basis of a sum of prediction residuals of these variables.

$$f(\mathtt{diffX},\ \mathtt{diffY},\ \mathtt{diffZ},\ \mathtt{diffAttr1},\ \cdots) = \mathtt{sum}(\mathtt{diffX} + \mathtt{diffY} + \mathtt{diffZ} + \mathtt{diffAttr1} + \cdots)$$

$$\cdots(1)$$

Note that, in Equation (1), diff [variable name] indicates a prediction residual of each variable. By doing in this way, since the prediction mode can be selected in consideration of not only a position but also each variable of attribute data, encoding and decoding can be performed by being adapted also to characteristics of the attribute data in addition to geometry data. For example, when the number of variables of the attribute data is large (when the number of dimensions is large) or when a range of the variables of the attribute data is larger than a range of the variables of the geometry data, the prediction mode may be selected to reduce dependency on the variables of the geometry data (in other words, to enhance dependency on the variables of the attribute data).

<Encoding device>

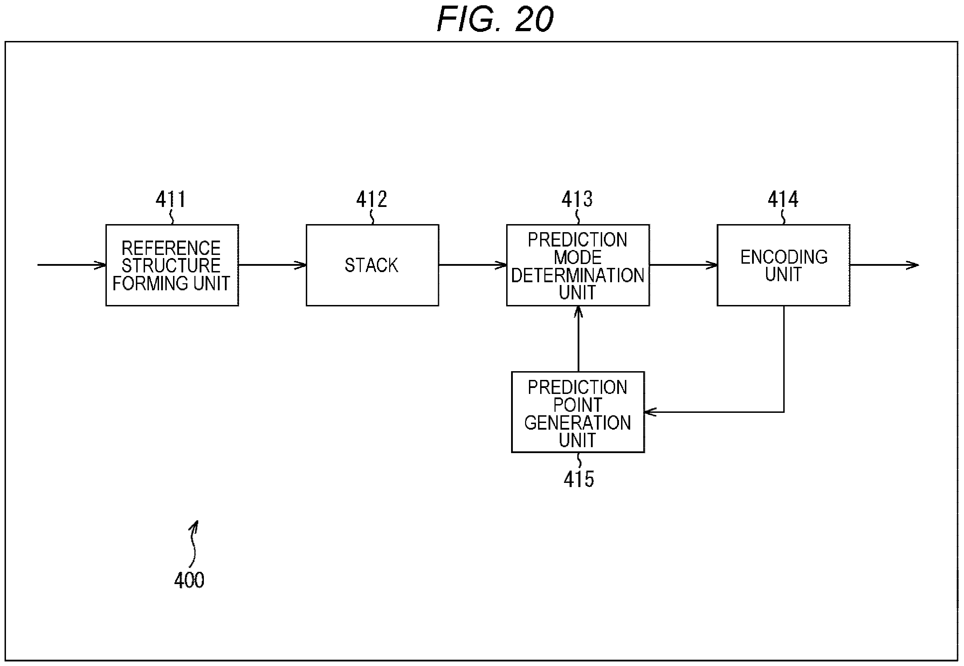

Next, a device to which the present technology described above is applied will be described. Fig. 20 is a block diagram illustrating an example of a configuration of an encoding device, which is one mode of an information processing apparatus to which the present technology is applied. An encoding device 400 illustrated in Fig. 20 is a device configured to encode a point cloud (3D data), similarly to the encoding device 100. However, the encoding device 400 encodes a point cloud by applying the present technology described above with reference to Fig. 19 and the like, for example.

Note that, in Fig. 20, main parts of processing units, data flows, and the like are illustrated, and those illustrated in Fig. 20 are not necessarily all. That is, in the encoding device 400, there may be a processing unit not illustrated as a block in Fig. 20, or there may be a flow of processing or data not illustrated as an arrow or the like in Fig. 20.

As illustrated in Fig. 20, the encoding device 400 includes a reference structure forming unit 411, a stack 412, a prediction mode determination unit 413, an encoding unit 414, and a prediction point generation unit 415.

Point cloud data (geometry data and attribute data) supplied to the encoding device 400 is supplied to the reference structure forming unit 411.

The reference structure forming unit 411 generates a reference structure (prediction tree) in encoding of a point cloud for both the supplied geometry data and attribute data. At that time, the reference structure forming unit 411 can form the reference structure by applying various methods as described above with reference to the table in Fig. 19. For example, the reference structure forming unit 411 may form the reference structure that is common between the geometry data and the attribute data. Furthermore, the reference structure forming unit 411 can form the reference structure of the geometry data and the reference structure of the attribute data independently of each other. The reference structure forming unit 411 supplies geometry data and attribute data of a processing target point to the stack 412, in accordance with the formed reference structure.

The stack 412 holds information in a last-in firstout method. For example, the stack 412 holds information about each point supplied from the reference structure forming unit 131. Furthermore, the stack 412 supplies information most recently held among the held information to the prediction mode determination unit 413, in response to a request from the prediction mode determination unit 413. The stack 412 can perform these processes for both geometry data and attribute data.

The prediction mode determination unit 413 performs processing related to determination of a prediction mode (a prediction point). For example, the prediction mode determination unit 413 acquires information about a point most recently held in the stack 412. Furthermore, the prediction mode determination unit 413 acquires information about a prediction point of the point (that is, a prediction value of the processing target point) and the like from the prediction point generation unit 415. When there is a plurality of prediction points corresponding to the processing target point as in the example of Fig. 2, all the prediction points are acquired. Then, the prediction mode determination unit 413 determines a prediction point (that is, a prediction mode) to be applied.

The prediction mode determination unit 413 can perform such a process for both geometry data and attribute data. Furthermore, at the time of the processing, the prediction mode determination unit 413 can apply various methods as described above with reference to the table of Fig. 19.

For example, the prediction mode determination unit 413 can select a prediction point (prediction mode) at which the prediction residual of the geometry data is minimized. Furthermore, the prediction mode determination unit 413 can select a prediction point (prediction mode) at which the prediction residual of the attribute data is minimized. Moreover, the prediction mode determination unit 413 can select a prediction point (prediction mode) at which the prediction residuals of the geometry data and the attribute data are minimized.

The prediction mode determination unit 413 supplies information regarding each point (for example, a prediction residual or the like of the geometry data and the attribute data of the selected prediction mode) to the encoding unit 414.

The encoding unit 414 acquires and encodes the information (for example, a prediction residual or the like of the selected prediction mode) supplied by the prediction mode determination unit 413, to generate coded data. The encoding unit 414 can perform such a process for both geometry data and attribute data.

The encoding unit 414 supplies the generated coded data to the outside of the encoding device 400 (for example, the decoding side) as coded data of the geometry data and the attribute data. Furthermore, the encoding unit 414 supplies the geometry data and attribute data of the processing target point to the prediction point generation unit 415.

The prediction point generation unit 415 performs processing related to generation of a prediction point, that is, derivation of a prediction value. For example, the prediction point generation unit 415 acquires information such as geometry data and attribute data of the processing target point supplied from the encoding unit 414. Furthermore, the prediction point generation unit 415 derives geometry data and attribute data (for example, a prediction value of geometry data and attribute data of a child node of the processing target node) of a prediction point that can be generated by using the geometry data, attribute data, and the like of the processing target point. At that time, the prediction point generation unit 415 can apply various methods as described above with reference to the table of Fig. 19. The prediction point generation unit 415 supplies the derived prediction value to the prediction mode determination unit 413 as necessary.

By having the above configuration, the encoding device 400 can encode attribute data by a method similar to the predictive geometry coding. Therefore, the encoding device 400 can obtain a similar effect to the case of the geometry data in encoding the attribute data. For example, since the prediction residual is encoded, the encoding device 400 can suppress an increase in encoding amount of the coded data of the attribute data. In addition, the encoding device 400 can control a storage capacity when the coded data is stored and a transmission rate when the coded data is transmitted. That is, the encoding device 400 can control a coded data bit rate of the attribute data.

Note that these processing units (the reference structure forming unit 411 to the prediction point generation unit 415) have any configuration. For example, each processing unit may be configured by a logic circuit that implements the above-described processing. Furthermore, each of the processing units may include, for example, a CPU, a ROM, a RAM, and the like, and execute a program by using them to implement the above-described processing. Of course, each processing unit may have both of the configurations, implement a part of the above-described processing by the logic circuit, and implement other by executing the program. The configurations of the processing units may be independent from each other and, for example, some processing units may implement a part of the above-described processing by the logic circuit, some other processing units may implement the above-described processing by executing the program, and still some other processing units may implement the above-described processing by both the logic circuit and the execution of the program.

<Flow of encoding process>

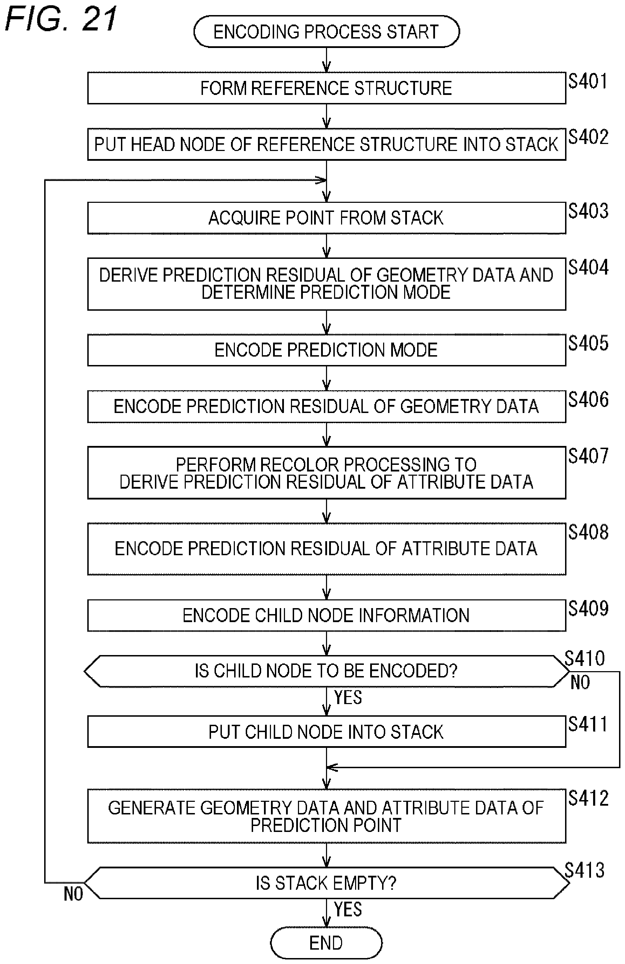

Next, processing executed by this encoding device 400 will be described. This encoding device 400 encodes data of a point cloud by executing an encoding process. An example of a flow of this encoding process will be described with reference to a flowchart of Fig. 21.

When the encoding process is started, the reference structure forming unit 411 executes a reference structure forming process in step S401 to form a reference structure (prediction tree) of geometry data and attribute data. The reference structure forming unit 411 can form the reference structure by a method similar to the method described in Non Patent Document 2, for example.

In step S402, the reference structure forming unit 411 stores, in the stack 412, geometry data, attribute data, and the like of a head node of the reference structure formed in step S401.

In step S403, the prediction mode determination unit 413 acquires geometry data, attribute data, and the like of a most recently stored point (node) from the stack 412.

In step S404, the prediction mode determination unit 413 sets, as a processing target, a point for which the information is acquired in step S403, derives a prediction residual of geometry data for the processing target point, and determines a prediction mode.

In step S405, the encoding unit 414 encodes the prediction mode determined in step S404. Furthermore, in step S406, the encoding unit 414 encodes the prediction residual of the geometry data in the prediction mode determined in step S404.

In step S407, the prediction mode determination unit 413 performs recolor processing to derive a prediction residual of the attribute data. In step S408, the encoding unit 414 encodes the prediction residual of the attribute data.

In step S409, the encoding unit 414 encodes child node information indicating which node is a child node of the processing target node.

In step S410, the reference structure forming unit 411 determines whether or not to encode the child node of the processing target node, on the basis of encoding control by the user or the like. When it is determined to encode, the process proceeds to step S411.

In step S411, the reference structure forming unit 411 stores geometry data and the like of the child node in the stack 412. When the process of step S411 ends, the process proceeds to step S412. Whereas, when it is determined in step S410 not to encode the child node, the process of step S411 is skipped, and the process proceeds to step S412.

In step S412, the prediction point generation unit 415 generates geometry data and attribute data of a prediction point that can be generated by using information (the geometry data, the attribute data, and the like) about the processing target point.

In step S413, the prediction mode determination unit 413 determines whether or not the stack 412 is empty. When it is determined that the stack 412 is not empty (that is, information about at least one or more points is stored), the process returns to step S403. That is, each processing of steps S403 to S413 is executed on a point most recently stored in the stack 412 as a processing target.

Such a process is repeated, and when it is determined in step S413 that the stack is empty, the geometry data encoding process ends.

By executing various processes as described above, the encoding device 400 can encode attribute data by a method similar to the predictive geometry coding. Therefore, the encoding device 400 can obtain a similar effect to the case of the geometry data in encoding the attribute data. For example, since the prediction residual is encoded, the encoding device 400 can suppress an increase in encoding amount of the coded data of the attribute data. In addition, the encoding device 400 can control a storage capacity when the coded data is stored and a transmission rate when the coded data is transmitted. That is, the encoding device 400 can control a coded data bit rate of the attribute data.

<Decoding device>

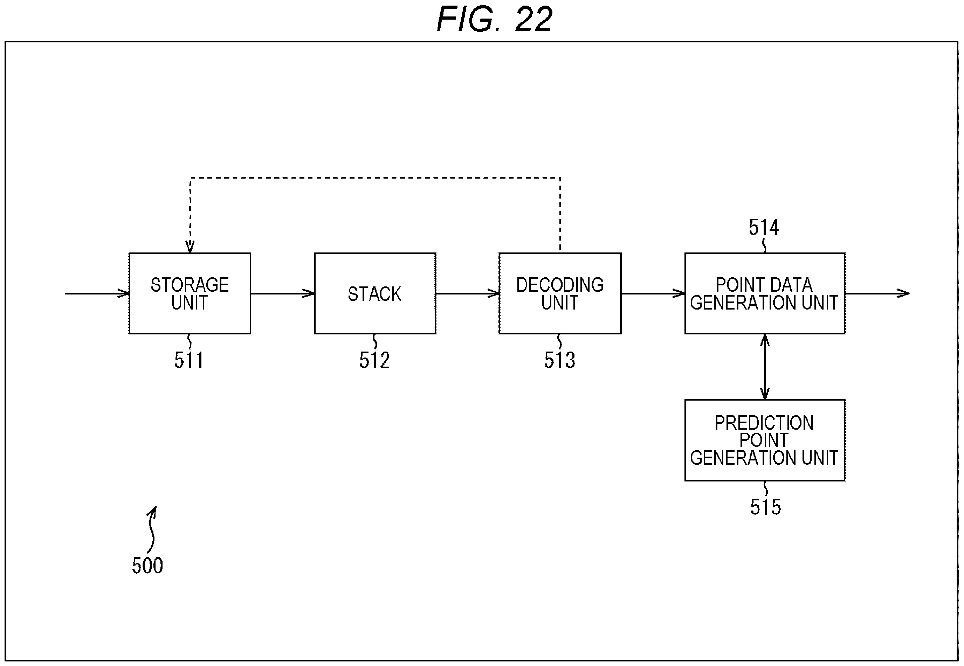

Fig. 22 is a block diagram illustrating an example of a configuration of a decoding device, which is one mode of an information processing apparatus to which the present technology is applied. A decoding device 500 illustrated in Fig. 22 is a device that decodes coded data of a point cloud (3D data). The decoding device 500 decodes, for example, coded data of a point cloud generated in the encoding device 400.

Note that, in Fig. 22, main parts of processing units, data flows, and the like are illustrated, and those illustrated in Fig. 22 are not necessarily all. That is, in the decoding device 500, there may be a processing unit not illustrated as a block in Fig. 22, or there may be a flow of processing or data not illustrated as an arrow or the like in Fig. 22.

As illustrated in Fig. 22, the decoding device 50 includes a storage unit 511, a stack 512, a decoding unit 513, a point data generation unit 514, and a prediction point generation unit 515.

Coded data of geometry data and attribute data supplied to the decoding device 500 is supplied to the storage unit 511.

The storage unit 511 stores the coded data of the geometry data and the attribute data supplied to the decoding device 500. Furthermore, the storage unit 511 supplies, to the stack 512, coded data of geometry data and attribute data of a point to be decoded under control of the decoding unit 513.

The stack 512 holds information in a last-in firstout method. For example, the stack 512 holds the coded data of the geometry data and the attribute data of each point, and the like, supplied from the storage unit 511. Furthermore, the stack 512 supplies information (for example, the coded data of the geometry data and the attribute data, and the like) most recently held among the held information to the decoding unit 513, in response to a request from the decoding unit 513.

The decoding unit 513 performs processing related to decoding of the coded data for both the geometry data and the attribute data. For example, the decoding unit 513 acquires coded data of a point most recently held in the stack 512. Furthermore, the decoding unit 513 decodes the acquired coded data, to generate geometry data (a prediction residual or the like) and attribute data (a prediction residual or the like). At that time, the decoding unit 513 can apply various methods as described above with reference to the table of Fig. 19. The decoding unit 513 supplies the generated geometry data (prediction residual or the like) and attribute data (prediction residual or the like) to the point data generation unit 514.

The point data generation unit 514 performs processing related to generation of point data (geometry data and attribute data). For example, the point data generation unit 514 acquires information such as a prediction residual or the like supplied from the decoding unit 513. Furthermore, the point data generation unit 514 acquires a prediction point (that is, a prediction value of geometry data and a prediction value of attribute data of the processing target point) corresponding to the processing target point, from the prediction point generation unit 515. Then, the point data generation unit 514 generates geometry data and attribute data of the processing target point, by using the acquired prediction residual and prediction value (for example, by adding both). The point data generation unit 514 supplies the generated geometry data and attribute data to the outside of the decoding device 500.

The prediction point generation unit 515 performs processing related to generation of a prediction point, that is, derivation of a prediction value. For example, the prediction point generation unit 515 acquires information such as geometry data and attribute data of the processing target point generated in the point data generation unit 514. Furthermore, the prediction point generation unit 515 derives: geometry data (for example, a prediction value of geometry data of a child node of the processing target node) of a prediction point that can be generated by using geometry data, attribute data, or the like of the processing target point; and attribute data of the prediction point. At that time, the prediction point generation unit 515 can apply various methods as described above with reference to the table of Fig. 19. For example, the prediction point generation unit 515 can generate a prediction point similarly to a case of the prediction point generation unit 415 of the encoding device 400. The prediction point generation unit 515 supplies the derived prediction value to the point data generation unit 514 as necessary.

By having the above configuration, the decoding device 500 can decode not only the coded data of the geometry data but also the coded data of the attribute data. Therefore, the decoding device 500 can suppress an increase in load of the decoding process.

<Flow of decoding process>

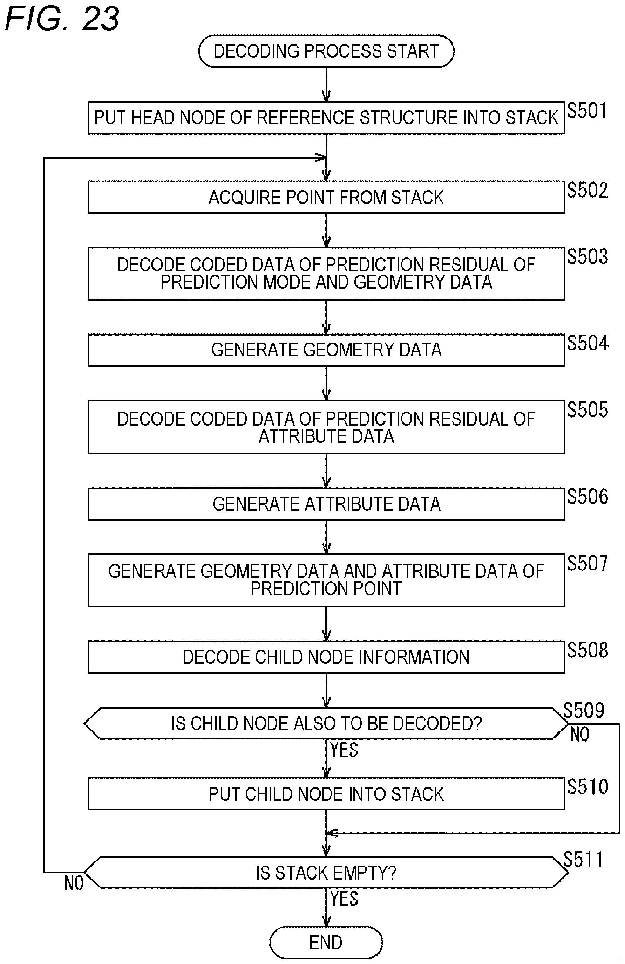

Next, processing executed by this decoding device 500 will be described. This decoding device 500 decodes coded data of a point cloud by executing a decoding process. An example of a flow of this decoding process will be described with reference to a flowchart of Fig. 23.

When the decoding process is started, in step S501, the storage unit 511 stores supplied coded data of geometry data and attribute data, and stores, in the stack 232, coded data of a head node of the reference structure (prediction tree) of the geometry data and the attribute data.

In step S502, the decoding unit 513 acquires coded data of a most recently stored point (node) from the stack 512.

In step S503, the decoding unit 513 decodes the coded data acquired in step S502, and generates a prediction residual of the prediction mode and the geometry data.

In step S504, the point data generation unit 514 generates geometry data of the processing target node by using the prediction residual generated in step S503 and a prediction value of the processing target node (for example, by adding both).

In step S505, the decoding unit 513 decodes the coded data acquired in step S502, and generates a prediction residual of the attribute data. In step S506, the point data generation unit 514 generates attribute data of the processing target node by using the prediction residual generated in step S503 and the prediction value of the processing target node (for example, by adding both).

In step S507, the prediction point generation unit 515 generates geometry data and attribute data (that is, a prediction value) of a prediction point that can be generated by using the geometry data of the processing target node. The geometry data and the attribute data of the prediction point are generated by using the prediction residual generated in step S503 and the prediction value of the processing target node (for example, by adding both).

In step S508, the decoding unit 513 decodes the coded data acquired in step S502 and generates child node information.

In step S509, the decoding unit 513 determines whether or not to also decode the child node on the basis of the child node information, layer information, and the like in accordance with decoding control of the user or the like. When it is determined to also decode the child node, the process proceeds to step S510.

In step S510, the decoding unit 513 controls the storage unit 511 to store coded data of the child node in the stack 512. When the process of step S510 ends, the process proceeds to step S511. Whereas, when it is determined in step S509 not to decode the child node, the process of step S510 is skipped, and the process proceeds to step S511.

In step S511, the decoding unit 513 determines whether or not the stack 512 is empty. When it is determined that the stack 512 is not empty (that is, information about at least one or more points is stored), the process returns to step S502. That is, the processing of steps S502 to S511 is executed on a point most recently stored in the stack 502 as the processing target.

Such a process is repeated, and when it is determined in step S511 that the stack is empty, the geometry data decoding process ends, and the process returns to Fig. 15.

By executing various processes as described above, the decoding device 500 can also decode the coded data of the attribute data in addition to the geometry data. Therefore, as described above, the decoding device 500 can suppress an increase in load of the decoding process.

<Transcoder>

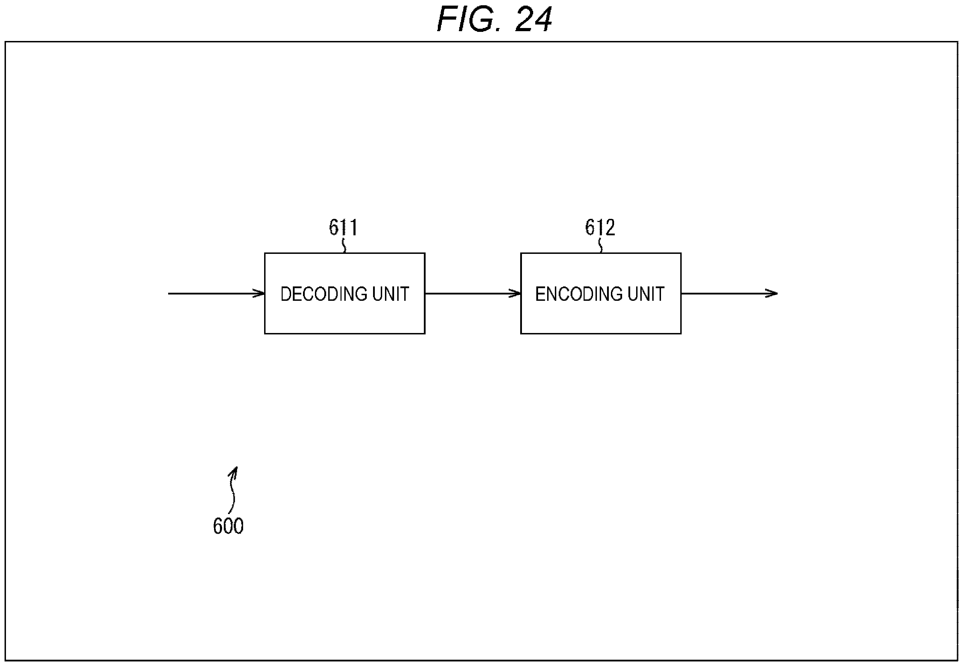

Fig. 24 is a block diagram illustrating an example of a configuration of a transcoder, which is one mode of an information processing apparatus to which the present technology is applied. A transcoder 600 illustrated in Fig. 24 is a device that decodes coded data of a point cloud (3D data), and re-encodes the coded data by performing, for example, parameter conversion or the like. The transcoder 600 transcodes (decodes and encodes) coded data of a point cloud generated in the encoding device 400, for example.

Note that, in Fig. 24, main parts of processing units, data flows, and the like are illustrated, and those illustrated in Fig. 24 are not necessarily all. That is, in the transcoder 600, there may be a processing unit not illustrated as a block in Fig. 24, or there may be a flow of processing or data not illustrated as an arrow or the like in Fig. 24.

As illustrated in Fig. 24, the transcoder 600 includes a decoding unit 611 and an encoding unit 612.

The decoding unit 611 acquires coded data of point cloud data inputted to the transcoder 600. The decoding unit 611 decodes the coded data to generate geometry data and attribute data. At that time, the decoding unit 611 can apply various methods as described above with reference to the table of Fig. 19. For example, the decoding unit 611 may have a configuration similar to that of the decoding device 500, and perform similar processing. The decoding unit 611 supplies the generated geometry data and attribute data to the encoding unit 612.

The encoding unit 612 acquires the geometry data and the attribute data supplied from the decoding unit 611. The encoding unit 612 re-encodes the geometry data to generate coded data of the geometry data. Furthermore, the encoding unit 612 re-encodes the attribute data to generate coded data of the attribute data. At that time, the encoding unit 612 can apply various methods as described above with reference to the table of Fig. 19. For example, the encoding unit 612 may have a configuration similar to that of the encoding device 400, and perform similar processing.

Note that changing of parameters of the geometry data and the attribute data in the transcoding such as, for example, reducing the number of points may be performed in the decoding unit 611 (by scalable decoding), may be performed in the encoding unit 612, or may be performed in both.

The encoding unit 612 outputs the coded data of the geometry data and the coded data of the attribute data that have been generated, to the outside of the transcoder 600 as a transcoding result.

By having the above configuration, the transcoder 600 can reduce the number of points at a time of transcoding. That is, the transcoder 600 can suppress an increase in load of the transcoding. Furthermore, the transcoder 600 can control a bit rate of coded data of geometry data and attribute data generated by the transcoding.

Note that these processing units (the decoding unit 611 and the encoding unit 612) have any configuration. For example, each processing unit may be configured by a logic circuit that implements the above-described processing. Furthermore, each of the processing units may include, for example, a CPU, a ROM, a RAM, and the like, and execute a program by using them to implement the above-described processing. Of course, each processing unit may have both of the configurations, implement a part of the above-described processing by the logic circuit, and implement other by executing the program. The configurations of the processing units may be independent from each other and, for example, some processing units may implement a part of the above-described processing by the logic circuit, some other processing units may implement the above-described processing by executing the program, and still some other processing units may implement the above-described processing by both the logic circuit and the execution of the program.

<Flow of transcoding process>

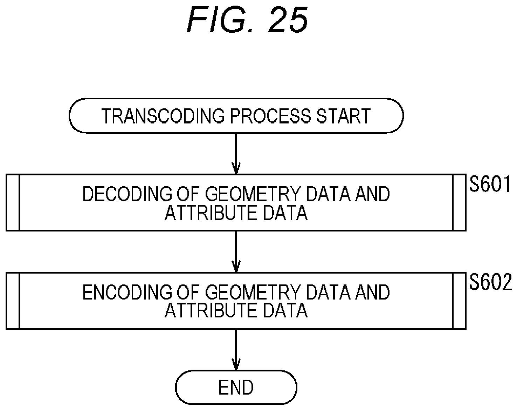

Next, processing executed by this transcoder 600 will be described. This transcoder 600 transcodes coded data of a point cloud by executing a transcoding process. An example of a flow of this transcoding process will be described with reference to a flowchart of Fig. 25.

When the transcoding process is started, the decoding unit 611 of the transcoder 600 executes a decoding process in step S601 to decode coded data, to generate geometry data and attribute data. For example, the decoding unit 611 can perform this decoding process in a flow similar to the decoding process described with reference to the flowchart of Fig. 23.

In step S602, the encoding unit 612 executes an encoding process to encode the geometry data and the attribute data, to generate coded data thereof. For example, the encoding unit 612 can perform this encoding process in a flow similar to the encoding process described with reference to the flowchart of Fig. 21. When the process of step S602 ends, the transcoding process ends.

By executing each process as described above, the transcoder 600 can reduce the number of points at a time of transcoding. That is, the transcoder 600 can suppress an increase in load of the transcoding. Furthermore, the transcoder 600 can control a bit rate of coded data of geometry data generated by the transcoding.

<3. Third embodiment>

<Layering of reference structure and prediction residual encoding of attribute data>

Note that the present technology described in the first embodiment and the present technology described in the second embodiment may be combined.

For example, as illustrated in the second row (the row of "1") from the top of the table illustrated in Fig. 4, when a group of points is formed, and a reference structure in which the group is made as a layer is formed, predictive geometry coding may be applied to encoding of attribute data as illustrated in the second row (the row of "2") from the top of the table illustrated in Fig. 19. For example, as shown in the fourth row (the row of "2-1-1") from the top of the table illustrated in Fig. 19, the reference structure may be made common between geometry data and attribute data.

For example, when: a reference structure of geometry data in encoding of a point cloud is formed, in which the reference structure is layered according to groups into which points of the point cloud representing a three-dimensional shaped object as a set of the points are classified; a prediction value of the geometry data is derived and a prediction residual that is a difference between the geometry data and the prediction value is derived, for each point on the basis of the formed reference structure; and the derived prediction residual of the geometry data of each point is encoded, a prediction value of the attribute data may be further derived and a prediction residual that is a difference between the attribute data and the prediction value may be further derived, for each point on the basis of the formed reference structure, and the derived prediction residual of the attribute data of each point may be further encoded.

Furthermore, as shown in the seventh to tenth rows from the top of the table illustrated in Fig. 19, attribute data of a prediction point of the processing target node may be the same as attribute data of a parent node of the processing target node, or may be an average of attribute data with a parent node of the processing target node and attribute data of a parent node of the parent node, or the attribute data of the prediction point of the processing target node may be a weighted average of attribute data with a parent node of the processing target node and attribute data of a parent node of the parent node with a reciprocal of a distance between points corresponding to those nodes as a weight, or may be an average of attribute data of nearby k nodes of a decoded node.

The prediction residual of the attribute data may be derived by setting, as the prediction value of the attribute data of the processing target node, for example: attribute data of a parent node to which the processing target node in the reference structure belongs; an average of the attribute data of the parent node and attribute data of a parent node of the parent node; a weighted average of the attribute data of the parent node and attribute data of a parent node of the parent node; or an average of attribute data of nearby nodes of the processing target node.

Furthermore, as shown in the twelfth to fifteenth rows from the top of the table illustrated in Fig. 19, it is possible to select a prediction point at which the prediction residual of the geometry data is minimized, a prediction point at which the prediction residual of the attribute data is minimized, or a prediction point at which the prediction residuals of the geometry data and the attribute data are minimized.

Furthermore, as shown in the fifth row from the top of the table illustrated in Fig. 19, a reference structure of all or some of the attribute data may be formed independently of the reference structure of the geometry data. For example, a parameter related to a color (RGB) of the attribute data may have a reference structure common to the geometry data, and a parameter of a reflectance and the like of the attribute data may be formed independently of the reference structure of the geometry data.

Conversely, as shown in the second row (the row of "1") from the top of the table illustrated in Fig. 19, when the predictive geometry coding is applied to encoding of attribute data, a group of points may be formed as illustrated in the second row from the top of the table illustrated in Fig. 4 (the row of "1"), and a reference structure in which the group is made as a layer may be formed.

For example, when: a reference structure of geometry data in encoding of a point cloud is formed, in which the reference structure is layered according to groups into which points of the point cloud representing a three-dimensional shaped object as a set of the points are classified; a prediction value of the geometry data is derived and a prediction residual that is a difference between the geometry data and the prediction value is derived, for each point on the basis of the formed reference structure; and the derived prediction residual of the geometry data of each point is encoded, the reference structure of the attribute data may be formed to be layered according to groups to which the points of the point cloud are classified.

Furthermore, a reference structure layered according to groups may be formed by performing group classification of points, rearranging the points for each group, and setting a reference destination of attribute data of each point in the rearranged order.

Furthermore, group classification of the points may be performed in accordance with positions of the points, features of the points in the point cloud, or both.

Furthermore, for each point, layer information indicating a group layer that is a layer according to a group in the reference structure may be generated, and the generated layer information may be further encoded.

Moreover, it is possible to generate layer information in which a group layer of each child node belonging to the processing target node in the reference structure is indicated by a relative value with respect to a group layer of the processing target node.

Furthermore, it is possible to generate layer information in which a group layer of a processing target node in the reference structure is indicated by a relative value with respect to a group layer of a parent node to which the processing target node belongs.

Moreover, whether to encode the prediction residual may be selected for each group layer that is a layer according to a group in the reference structure, for each branch of the reference structure, or for both of the each group layer and the each branch, and the prediction residual of the group layer or the branch selected for encoding may be encoded.

<Encoding device>

The encoding device in this case has, for example, the configuration of the encoding device 400 illustrated in Fig. 20, and the reference structure forming unit 411 has the configuration as illustrated in Fig. 9. By having such a configuration, this encoding device can obtain the effects described in the first and second embodiments. That is, it is possible to perform group layering on a reference structure and encode a prediction residual of attribute data. Therefore, an increase in load of the encoding process can be suppressed. Furthermore, a bit rate of coded data of geometry data generated by the encoding can be controlled.

<Flow of encoding process>

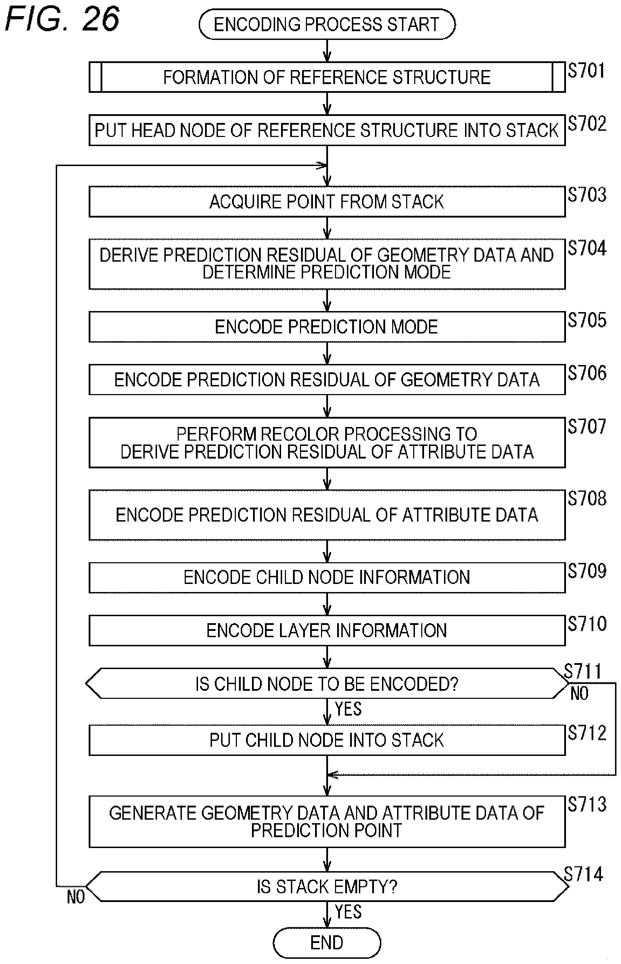

Furthermore, an example of a flow of an encoding process in this case will be described with reference to a flowchart of Fig. 26. In this case, as shown in the flowchart in Fig. 26, in the encoding process, in step S701, the reference structure forming unit 411 executes a reference structure forming process in a flow as illustrated in the flowchart in Fig. 12, similarly to the case of step S131 in Fig. 11.

Each process of steps S702 to S709 is executed similarly to each process of steps S402 to S409 of Fig. 21.

In step S710, the encoding unit 414 encodes the layer information generated in step S701, similarly to the case of step S138 in Fig. 11.

Each process of steps S711 to S714 is executed similarly to each process of steps S410 to S413 of Fig. 21.

By executing various processes as described above, the effects described in the first and second embodiments can be obtained. That is, it is possible to perform group layering on a reference structure and encode a prediction residual of attribute data. Therefore, an increase in load of the encoding process can be suppressed. Furthermore, a bit rate of coded data of geometry data generated by the encoding can be controlled.

<Decoding device>

The decoding device in this case has, for example, a configuration similar to that of the decoding device 500 illustrated in Fig. 22.

<Flow of decoding process>

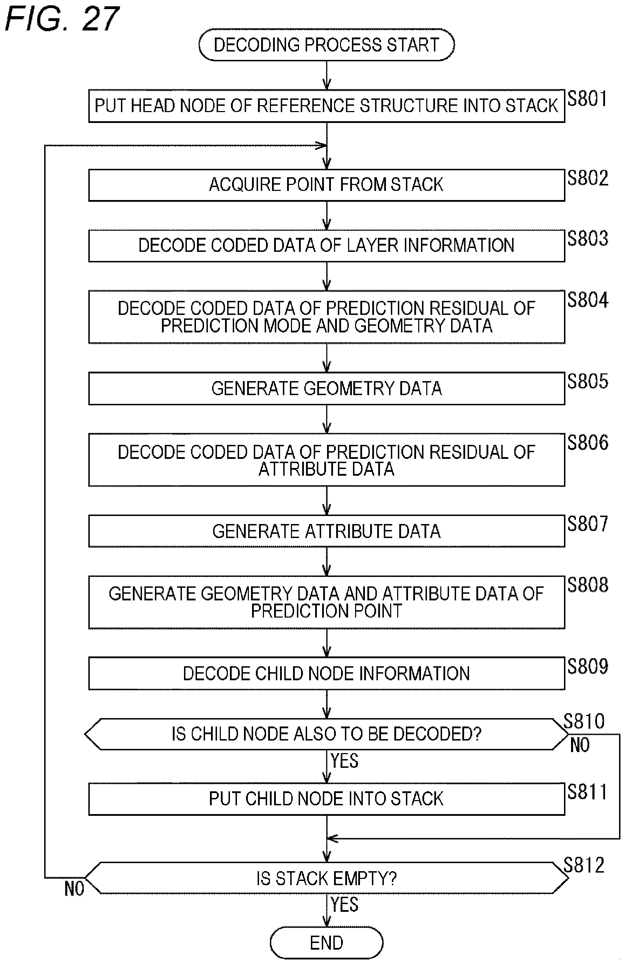

An example of a flow of a decoding process in this case will be described with reference to a flowchart in Fig. 27. In this case, when the decoding process is started, each process of steps S801 and S802 is executed similarly to each process of steps S501 and S502 in Fig. 23.

In step S803, the decoding unit decodes coded data to generate layer information, similarly to the case of step S233 in Fig. 16. Thereafter, each process of steps S804 to S812 is executed similarly to each process of steps S503 to S511 of Fig. 23.

By executing various processes as described above, the effects described in the first and second embodiments can be obtained. That is, it is possible to perform group layering on a reference structure and encode a prediction residual of attribute data. Therefore, an increase in load of the decoding process can be suppressed. Furthermore, scalability of decoding can be achieved, and a bit rate of coded data of geometry data generated by the encoding can be controlled.

<Transcoder>

A transcoder in this case has a configuration similarly to that of the transcoder 600 as illustrated in Fig. 24.

<Flow of transcoding process>

A transcoding process in this case is executed in a flow similar to the flowchart illustrated in Fig. 25. However, in step S601, an encoding process is executed in a flow similar to the flowchart illustrated in Fig. 26. Furthermore, in step S602, the encoding process is executed in a flow similar to the flowchart illustrated in Fig. 27.

By performing such a process, the transcoder in this case can reduce the number of points at a time of transcoding. That is, it is possible to suppress an increase in load of the transcoding. Furthermore, scalability of decoding can be achieved, and a bit rate of coded data of geometry data and attribute data generated by the transcoding can be controlled.

<4. Supplementary note>

<Control information>

Control information related to the present technology described in each embodiment described above may be transmitted from the encoding side to the decoding side. For example, it is possible to transmit control information (for example, enabled_flag) for controlling whether or not application of the present technology described above is permitted (or prohibited). Furthermore, for example, it is possible to transmit control information specifying a range (for example, an upper limit, a lower limit, or both for a block size, a slice, a picture, a sequence, a component, a view, a layer, or the like) in which application of the present technology described above is permitted (or prohibited).

<Around and nearby>

Note that, in the present specification, a positional relationship such as "nearby" or "around" may include not only a spatial positional relationship but also a temporal positional relationship.

<Computer>

The series of processes described above can be executed by hardware or also executed by software. When the series of processes are performed by software, a program that configures the software is installed in a computer. Here, examples of the computer include, for example, a computer that is built in dedicated hardware, a general-purpose personal computer that can perform various functions by being installed with various programs, and the like.

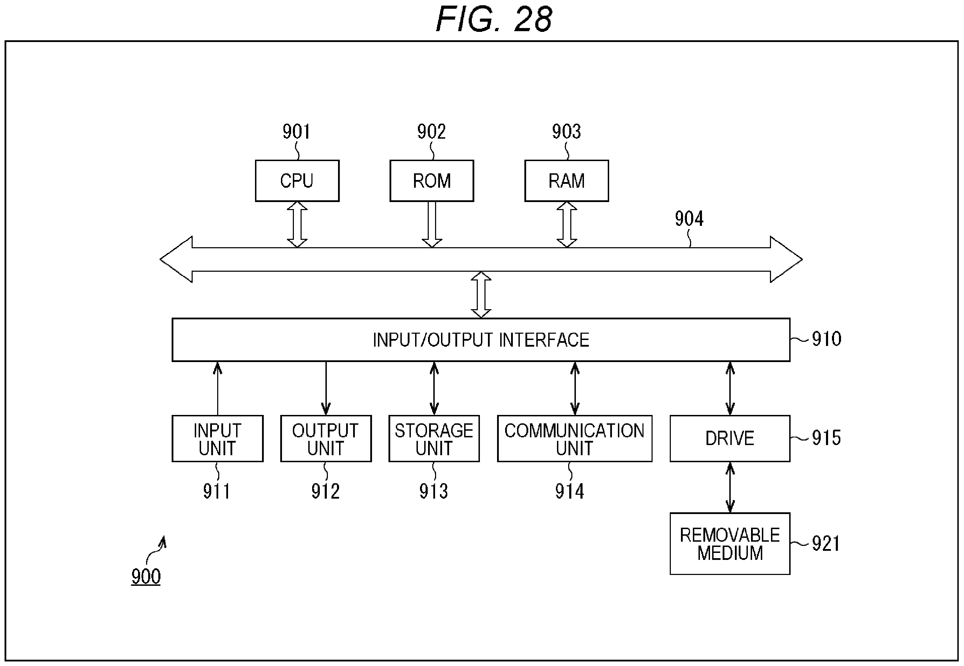

Fig. 28 is a block diagram illustrating a configuration example of hardware of a computer that executes the series of processes described above in accordance with a program.

In a computer 900 illustrated in Fig. 28, a central processing unit (CPU) 901, a read only memory (ROM) 902, and a random access memory (RAM) 903 are mutually connected via a bus 904.

The bus 904 is further connected with an input/output interface 910. To the input/output interface 910, an input unit 911, an output unit 912, a storage unit 913, a communication unit 914, and a drive 915 are connected.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes, for example, a network interface or the like. The drive 915 drives a removable medium 921 such as a magnetic disk, an optical disk, a magneto-optical disk, or a semiconductor memory.

In the computer configured as described above, the series of processes described above are performed, for example, by the CPU 901 loading a program recorded in the storage unit 913 into the RAM 903 via the input/output interface 910 and the bus 904, and executing. The R_AM 903 also appropriately stores data necessary for the CPU 901 to execute various processes, for example.

The program executed by the computer can be applied by being recorded on, for example, the removable medium 921 as a package medium or the like. In this case, by attaching the removable medium 921 to the drive 915, the program can be installed in the storage unit 913 via the input/output interface 910.

Furthermore, this program can also be provided via a wired or wireless transmission medium such as a local area network, the Internet, or digital satellite broadcasting. In this case, the program can be received by the communication unit 914 and installed in the storage unit 913.

Besides, the program can be installed in advance in the ROM 902 and the storage unit 913.

<Applicable target of present technology>

The case where the present technology is applied to encoding and decoding of point cloud data has been described above, but the present technology can be applied to encoding and decoding of 3D data of any standard without limiting to these examples. For example, in encoding/decoding of mesh data, the mesh data may be converted into point cloud data, and the present technology may be applied to perform encoding/decoding. That is, as long as there is no contradiction with the present technology described above, any specifications may be adopted for various processes such as an encoding and decoding method and various types of data such as 3D data and metadata. Furthermore, as long as there is no contradiction with the present technology, some processes and specifications described above may be omitted.

The present technology can be applied to any configuration. For example, the present technology may be applied to various electronic devices such as a transmitter or a receiver (for example, a television receiver or a mobile phone) in satellite broadcasting, cable broadcasting such as cable TV, distribution on the Internet, and distribution to a terminal by cellular communication, or a device (for example, a hard disk recorder or a camera) that records an image on a medium such as an optical disk, a magnetic disk, or a flash memory, or reproduces an image from these storage media.

Furthermore, for example, the present technology can also be implemented as a partial configuration of a device such as: a processor (for example, a video processor) as a system large scale integration (LSI) or the like; a module (for example, a video module) using a plurality of processors or the like; a unit (for example, a video unit) using a plurality of modules or the like; or a set (for example, a video set) in which other functions are further added to the unit.

Furthermore, for example, the present technology can also be applied to a network system including a plurality of devices. For example, the present technology may be implemented as cloud computing that performs processing in sharing and in cooperation by a plurality of devices via a network. For example, for any terminal such as a computer, an audio visual (AV) device, a portable information processing terminal, or an Internet of Things (IoT) device, the present technology may be implemented in a cloud service that provides a service related to an image (moving image).

Note that, in the present specification, the system means a set of a plurality of components (a device, a module (a part), and the like), and it does not matter whether or not all the components are in the same housing. Therefore, a plurality of devices housed in separate housings and connected via a network, and a single device with a plurality of modules housed in one housing are both systems.

<Field and application to which present technology is applicable>

A system, a device, a processing unit, and the like to which the present technology is applied can be utilized in any field such as, for example, transportation, medical care, crime prevention, agriculture, livestock industry, mining industry, beauty care, factory, household electric appliance, weather, natural monitoring, and the like. Furthermore, any application thereof may be adopted.

<Others>

Note that, in the present specification, "flag" is information for identifying a plurality of states, and includes not only information to be used for identifying two states of true (1) or false (0), but also information that enables identification of three or more states. Therefore, a value that can be taken by the "flag" may be, for example, a binary value of 1/0, or may be a ternary value or more. That is, the number of bits included in the "flag" can take any number, and may be 1 bit or a plurality of bits. Furthermore, for the identification information (including the flag), in addition to a form in which the identification information is included in a bitstream, a form is assumed in which difference information of the identification information with respect to a certain reference information is included in the bitstream. Therefore, in the present specification, the "flag" and the "identification information" include not only the information thereof but also the difference information with respect to the reference information.

Furthermore, various kinds of information (such as metadata) related to coded data (a bitstream) may be transmitted or recorded in any form as long as it is associated with the coded data. Here, the term "associating" means, when processing one data, allowing other data to be used (to be linked), for example. That is, the data associated with each other may be combined as one data or may be individual data. For example, information associated with coded data (an image) may be transmitted on a transmission line different from the coded data (the image). Furthermore, for example, information associated with the coded data (the image) may be recorded on a recording medium different from the coded data (the image) (or another recording region of the same recording medium). Note that this "association" may be for a part of the data, rather than the entire data. For example, an image and information corresponding to the image may be associated with each other in any unit such as a plurality of frames, one frame, or a part within a frame.

Note that, in the present specification, terms such as "synthesize", "multiplex", "add", "integrate", "include", "store", "put in", "introduce", "insert", and the like mean, for example, to combine a plurality of objects into one, such as to combine coded data and metadata into one data, and mean one method of "associating" described above.

Furthermore, the embodiments of the present technology are not limited to the above-described embodiments, and various modifications can be made without departing from the scope of the present technology.

For example, a configuration described as one device (or processing unit) may be divided and configured as a plurality of devices (or processing units). On the contrary, a configuration described above as a plurality of devices (or processing units) may be collectively configured as one device (or processing unit). Furthermore, as a matter of course, a configuration other than the above may be added to a configuration of each device (or each process unit). Moreover, as long as a configuration and an operation of the entire system are substantially the same, a part of a configuration of one device (or processing unit) may be included in a configuration of another device (or another processing unit).

Furthermore, for example, the above-described program may be executed in any device. In that case, the device is only required to have a necessary function (a functional block or the like) such that necessary information can be obtained.

Furthermore, for example, each step of one flowchart may be executed by one device, or may be shared and executed by a plurality of devices. Moreover, when one step includes a plurality of processes, the plurality of processes may be executed by one device or may be shared and executed by a plurality of devices. In other words, a plurality of processes included in one step can be executed as a plurality of steps. On the contrary, a process described as a plurality of steps can be collectively executed as one step.

Furthermore, for example, in a program executed by the computer, process of steps describing the program may be executed in chronological order in the order described in the present specification, or may be executed in parallel or individually at a required timing such as when a call is made. That is, as long as no contradiction occurs, processing of each step may be executed in an order different from the order described above. Moreover, this process of steps describing program may be executed in parallel with processing of another program, or may be executed in combination with processing of another program.

Furthermore, for example, a plurality of techniques related to the present technology can be implemented independently as a single body as long as there is no contradiction. Of course, any of the plurality of present technologies can be used in combination. For example, a part or all of the present technology described in any embodiment can be implemented in combination with a part or all of the present technology described in another embodiment. Furthermore, a part or all of the present technology described above may be implemented in combination with another technology not described above.

Note that the present technology can also have the following configurations.

(1) An information processing apparatus including:

a reference structure forming unit configured to form a reference structure of geometry data in encoding of a point cloud, the reference structure being layered according to groups into which points of the point cloud representing a three-dimensional shaped object as a set of the points are classified;
a prediction residual derivation unit configured to derive a prediction value of the geometry data and derive a prediction residual that is a difference between the geometry data and the prediction value, for each point on the basis of the reference structure formed by the reference structure forming unit; and
an encoding unit configured to encode the prediction residual of the geometry data of each point, the prediction residual being derived by the prediction residual derivation unit.

(2) The information processing apparatus according to (1), in which
the reference structure forming unit includes:

a group-classification processing unit configured to perform group classification of the points;
a rearrangement unit configured to rearrange the points for each of the groups; and
a group-layered reference structure forming unit configured to form the reference structure layered according to the groups, by setting a reference destination of the geometry data of each point in an order rearranged by the rearrangement unit.

(3) The information processing apparatus according to (2), in which
the group-classification processing unit performs group classification of the points in accordance with positions of the points.

(4) The information processing apparatus according to (2) or (3), in which
the group-classification processing unit performs group classification of the points in accordance with features of the points in the point cloud.

(5) The information processing apparatus according to any one of (2) to (4), in which
the reference structure forming unit further includes:

a layer information generation unit configured to generate, for each point, layer information indicating a group layer that is a layer according to each of the groups in the reference structure, and
the encoding unit further encodes the layer information generated by the layer information generation unit.

(6) The information processing apparatus according to (5), in which
the layer information generation unit generates the layer information in which the group layer of each child node belonging to a processing target node in the reference structure is indicated by a relative value with respect to the group layer of the processing target node.

(7) The information processing apparatus according to (5), in which
the layer information generation unit generates the layer information in which the group layer of a processing target node in the reference structure is indicated by a relative value with respect to the group layer of a parent node to which the processing target node belongs.

(8) The information processing apparatus according to any one of (1) to (7), in which
the encoding unit quantizes and encodes the prediction residual in a quantization step set for each group layer that is a layer according to each of the groups in the reference structure.

(9) The information processing apparatus according to (8), in which
the encoding unit encodes information indicating the quantization step.

(10) The information processing apparatus according to any one of (1) to (9), in which
the encoding unit performs arithmetic encoding with the prediction residual being classified into each group layer that is a layer according to each of the groups in the reference structure.

(11) The information processing apparatus according to any one of (1) to (9), in which
the encoding unit performs arithmetic encoding without classification of the prediction residual into each group layer that is a layer according to each of the groups in the reference structure.

(12) The information processing apparatus according to any one of (1) to (11), in which
the encoding unit selects whether to encode the prediction residual for each group layer that is a layer according to each of the groups in the reference structure, and the encoding unit encodes the prediction residual of the group layer selected for encoding.

(13) The information processing apparatus according to any one of (1) to (12), in which
the encoding unit selects whether to encode the prediction residual for each branch of the reference structure, and encodes the prediction residual of the branch selected for encoding.

(14) The information processing apparatus according to any one of (1) to (13), in which

the prediction residual derivation unit further derives a prediction value of attribute data and further derives a prediction residual that is a difference between the attribute data and the prediction value, for each point on the basis of the reference structure formed by the reference structure forming unit, and
the encoding unit further encodes the prediction residual of the attribute data of each point, the prediction residual being derived by the prediction residual derivation unit.

(15) The information processing apparatus according to (14), in which
the prediction residual derivation unit derives the prediction residual of the attribute data by setting, as the prediction value of the attribute data of a processing target node: the attribute data of a parent node to which the processing target node in the reference structure belongs; an average of the attribute data of the parent node and the attribute data of a parent node of the parent node; a weighted average of the attribute data of the parent node and the attribute data of a parent node of the parent node; or an average of the attribute data of nearby nodes of the processing target node.

(16) The information processing apparatus according to (14) or (15), in which
the prediction residual derivation unit applies a derivation method that minimizes the prediction residual of the geometry data, the attribute data, or both of the geometry data and the attribute data, and the prediction residual derivation unit derives the prediction residuals of the geometry data and the attribute data in accordance with the derivation method.

(17) The information processing apparatus according to any one of (1) to (16), in which

the reference structure forming unit further forms a reference structure of attribute data in encoding of the point cloud, independently of the reference structure of the geometry data,

the prediction residual derivation unit further derives a prediction value of the attribute data and further derives a prediction residual that is a difference between the attribute data and the prediction value, for each point on the basis of the reference structure of the attribute data formed by the reference structure forming unit, and the encoding unit further encodes the prediction residual of the attribute data of each point, the prediction residual being derived by the prediction residual derivation unit.

(18) An information processing method including:

forming a reference structure of geometry data in encoding of a point cloud, the reference structure being layered according to groups into which points of the point cloud representing a three-dimensional shaped object as a set of the points are classified;

deriving a prediction value of the geometry data and deriving a prediction residual that is a difference between the geometry data and the prediction value, for each point on the basis of the formed reference structure; and encoding the derived prediction residual of the geometry data of each point.

(19) An information processing apparatus including:
a decoding unit configured to decode coded data corresponding to a group layer that is desired among coded data obtained by encoding a prediction residual that is a difference between geometry data of each point and a prediction value of the geometry data, the prediction residual being derived on the basis of a reference structure, on the basis of layer information indicating the group layer that is a layer according to each of groups in the reference structure of the geometry data in encoding of a point cloud, the reference structure being layered according to the groups into which points of the point cloud representing a three-dimensional shaped object as a set of the points are classified.

(20) An information processing method including:
decoding coded data corresponding to a group layer that is desired among coded data obtained by encoding a prediction residual that is a difference between geometry data of each point and a prediction value of the geometry data, the prediction residual being derived on the basis of a reference structure, on the basis of layer information indicating the group layer that is a layer according to each of groups in the reference structure of the geometry data in encoding of a point cloud, the reference structure being layered according to the groups into which points of the point cloud representing a three-dimensional shaped object as a set of the points are classified.

(21) An information processing apparatus including:

a reference structure forming unit configured to form a reference structure of attribute data in encoding of a point cloud representing a three-dimensional shaped object as a set of points;

a prediction residual derivation unit configured to derive a prediction value of the attribute data and derive a prediction residual that is a difference between the attribute data and the prediction value, for each point on the basis of the reference structure formed by the reference structure forming unit; and

an encoding unit configured to encode the prediction residual of the attribute data of each point, the prediction residual being derived by the prediction residual derivation unit.

(22) The information processing apparatus according to (21), in which
the prediction residual derivation unit sets the attribute data of a parent node to which a processing target node in the reference structure belongs, as the prediction value of the attribute data of the processing target node, and the prediction residual derivation unit derives the prediction residual of the attribute data.

(23) The information processing apparatus according to (21) or (22), in which
the prediction residual derivation unit sets an average of the attribute data of a parent node to which a processing target node in the reference structure belongs and the attribute data of a parent node of the parent node, as the prediction value of the attribute data of the processing target node, and the prediction residual derivation unit derives the prediction residual of the attribute data.

(24) The information processing apparatus according to any one of (21) to (23), in which
the prediction residual derivation unit sets a weighted average of the attribute data of a parent node to which a processing target node in the reference structure belongs and the attribute data of a parent node of the parent node, as the prediction value of the attribute data of the processing target node, and the prediction residual derivation unit derives the prediction residual of the attribute data.

(25) The information processing apparatus according to any one of (21) to (24), in which
the prediction residual derivation unit sets an average of the attribute data of nearby nodes of a processing target node in the reference structure, as the prediction value of the attribute data of the processing target node, and the prediction residual derivation unit derives the prediction residual of the attribute data.

(26) The information processing apparatus according to any one of (21) to (25), in which

the prediction residual derivation unit further derives a prediction value of geometry data and further derives a prediction residual that is a difference between the geometry data and the prediction value, for each point on the basis of the reference structure formed by the reference structure forming unit, and

the encoding unit further encodes the prediction residual of the geometry data of each point, the prediction residual being derived by the prediction residual derivation unit.

(27) The information processing apparatus according to (26), in which
the prediction residual derivation unit applies a derivation method that minimizes the prediction residual of the geometry data, and derives the prediction residuals of the geometry data and the attribute data in accordance with the derivation method.

(28) The information processing apparatus according to (26), in which
the prediction residual derivation unit applies a derivation method that minimizes the prediction residual of the attribute data, and derives the prediction residuals of the geometry data and the attribute data in accordance with the derivation method.

(29) The information processing apparatus according to (26), in which
the prediction residual derivation unit applies a derivation method that minimizes the prediction residuals of the geometry data and the attribute data, and derives the prediction residuals of the geometry data and the attribute data in accordance with the derivation method.

(30) The information processing apparatus according to any one of (21) to (29), in which

the reference structure forming unit further forms a reference structure of geometry data in encoding of the point cloud, independently of the reference structure of the attribute data,

the prediction residual derivation unit further derives a prediction value of the geometry data and further derives a prediction residual that is a difference between the geometry data and the prediction value, for each point on the basis of the reference structure of the geometry data formed by the reference structure forming unit, and

the encoding unit further encodes the prediction residual of the geometry data of each point, the prediction residual being derived by the prediction residual derivation unit.

(31) The information processing apparatus according to any one of (21) to (30), in which
the reference structure forming unit forms the reference structure of the attribute data to be layered according to groups to which the points of the point cloud are classified.

(32) The information processing apparatus according to (31), in which
the reference structure forming unit includes:

a group-classification processing unit configured to perform group classification of the points;

a rearrangement unit configured to rearrange the points for each of the groups; and

a group-layered reference structure forming unit configured to form the reference structure layered according to the groups, by setting a reference destination of the attribute data of each point in an order rearranged by the rearrangement unit.

(33) The information processing apparatus according to (32), in which
the group-classification processing unit performs group classification of the points in accordance with positions of the points, features of the points in the point cloud, or both of the positions and the features.

(34) The information processing apparatus according to (32) or (33), in which
the reference structure forming unit further includes:

a layer information generation unit configured to generate, for each point, layer information indicating a group layer that is a layer according to each of the groups in the reference structure, and

the encoding unit further encodes the layer information generated by the layer information generation unit.

(35) The information processing apparatus according to (34), in which
the layer information generation unit generates the layer information in which the group layer of each child node belonging to a processing target node in the reference structure is indicated by a relative value with respect to the group layer of the processing target node.

(36) The information processing apparatus according to (34), in which

the layer information generation unit generates the layer information in which the group layer of a processing target node in the reference structure is indicated by a relative value with respect to the group layer of a parent node to which the processing target node belongs.

(37) The information processing apparatus according to any one of (31) to (36), in which

the encoding unit selects whether to encode the prediction residual, for each group layer that is a layer according to each of the groups in the reference structure, for each branch of the reference structure, or for both of the each group layer and the each branch, and the encoding unit encodes the prediction residual of the group layer or the branch selected for encoding.

(38) An information processing method including:

forming a reference structure of attribute data in encoding of a point cloud representing a three-dimensional shaped object as a set of points;

deriving a prediction value of the attribute data and deriving a prediction residual that is a difference between the attribute data and the prediction value, for each point on the basis of the formed reference structure; and

encoding the derived prediction residual of the attribute data of each point.

(39) An information processing apparatus including:

a decoding unit configured to decode coded data obtained by encoding a prediction residual to generate the prediction residual of attribute data, the prediction residual being a difference between the attribute data of each point and a prediction value of the attribute data, the prediction residual being derived on the basis of a reference structure of the attribute data in encoding of a point cloud representing a three-dimensional shaped object as a set of points; and

a generation unit configured to generate the attribute data by using the prediction residual of the attribute data and a prediction value of the attribute data, the prediction residual being generated by decoding the coded data by the decoding unit.

(40) An information processing method including:

decoding coded data obtained by encoding a prediction residual to generate the prediction residual of attribute data, the prediction residual being a difference between the attribute data of each point and a prediction value of the attribute data, the prediction residual being derived on the basis of a reference structure of the attribute data in encoding of a point cloud representing a three-dimensional shaped object as a set of points; and

generating the attribute data by using the prediction residual of the attribute data and a prediction value of the attribute data, the prediction residual being generated by decoding the coded data.

REFERENCE SIGNS LIST

| | |
|---|---|
| 100 | Encoding device |
| 111 | Geometry data encoding unit |
| 112 | Attribute data encoding unit |
| 131 | Reference structure forming unit |
| 132 | Stack |
| 133 | Prediction mode determination unit |
| 134 | Encoding unit |
| 135 | Prediction point generation unit |
| 151 | Group-classification processing unit |
| 152 | Sorting unit |
| 153 | Group-layered reference structure forming unit |
| 154 | Layer information generation unit |
| 200 | Decoding device |
| 211 | Geometry data decoding unit |
| 212 | Attribute data decoding unit |
| 231 | Storage unit |
| 232 | Stack |
| 233 | Decoding unit |

234     Geometry data generation unit
235     Prediction point generation unit
300     Transcoder
311     Geometry data decoding unit
312     Geometry data encoding unit
313     Attribute data transcoding processing unit
400     Encoding device
411     Reference structure forming unit
412     Stack
413     Prediction mode determination unit
414     Encoding unit
415     Prediction point generation unit
500     Decoding device
511     Storage unit
512     Stack
513     Decoding unit
514     Point data generation unit
515     Prediction point generation unit
600     Transcoder
611     Decoding unit
612     Encoding unit
900     Computer

**Claims**

1.  An information processing apparatus comprising:

    a reference structure forming unit configured to form a reference structure of geometry data in encoding of a point cloud, the reference structure being layered according to groups into which points of the point cloud representing a three-dimensional shaped object as a set of the points are classified;
    a prediction residual derivation unit configured to derive a prediction value of the geometry data and derive a prediction residual that is a difference between the geometry data and the prediction value, for each point on a basis of the reference structure formed by the reference structure forming unit; and
    an encoding unit configured to encode the prediction residual of the geometry data of each point, the prediction residual being derived by the prediction residual derivation unit.

2.  The information processing apparatus according to claim 1, wherein
    the reference structure forming unit includes:

    a group-classification processing unit configured to perform group classification of the points;
    a rearrangement unit configured to rearrange the points for each of the groups; and
    a group-layered reference structure forming unit configured to form the reference structure layered according to the groups, by setting a reference destination of the geometry data of each point in an order rearranged by the rearrangement unit.

3.  The information processing apparatus according to claim 2, wherein
    the group-classification processing unit performs group classification of the points in accordance with positions of the points.

4.  The information processing apparatus according to claim 2, wherein
    the group-classification processing unit performs group classification of the points in accordance with features of the points in the point cloud.

5.  The information processing apparatus according to claim 2, wherein
    the reference structure forming unit further includes:

    a layer information generation unit configured to generate, for each point, layer information indicating a group layer that is a layer according to each of the groups in the reference structure, and
the encoding unit further encodes the layer information generated by the layer information generation unit.

6. The information processing apparatus according to claim 5, wherein
the layer information generation unit generates the layer information in which the group layer of each child node belonging to a processing target node in the reference structure is indicated by a relative value with respect to the group layer of the processing target node.

7. The information processing apparatus according to claim 5, wherein
the layer information generation unit generates the layer information in which the group layer of a processing target node in the reference structure is indicated by a relative value with respect to the group layer of a parent node to which the processing target node belongs.

8. The information processing apparatus according to claim 1, wherein
the encoding unit quantizes and encodes the prediction residual in a quantization step set for each group layer that is a layer according to each of the groups in the reference structure.

9. The information processing apparatus according to claim 8, wherein
the encoding unit encodes information indicating the quantization step.

10. The information processing apparatus according to claim 1, wherein
the encoding unit performs arithmetic encoding with the prediction residual being classified into each group layer that is a layer according to each of the groups in the reference structure.

11. The information processing apparatus according to claim 1, wherein
the encoding unit performs arithmetic encoding without classification of the prediction residual into each group layer that is a layer according to each of the groups in the reference structure.

12. The information processing apparatus according to claim 1, wherein
the encoding unit selects whether to encode the prediction residual for each group layer that is a layer according to each of the groups in the reference structure, and the encoding unit encodes the prediction residual of the group layer selected for encoding.

13. The information processing apparatus according to claim 1, wherein
the encoding unit selects whether to encode the prediction residual for each branch of the reference structure, and the encoding unit encodes the prediction residual of the branch selected for encoding.

14. The information processing apparatus according to claim 1, wherein

the prediction residual derivation unit further derives a prediction value of attribute data and further derives a prediction residual that is a difference between the attribute data and the prediction value, for each point on a basis of the reference structure formed by the reference structure forming unit, and
the encoding unit further encodes the prediction residual of the attribute data of each point, the prediction residual being derived by the prediction residual derivation unit.

15. The information processing apparatus according to claim 14, wherein
the prediction residual derivation unit derives the prediction residual of the attribute data by setting, as the prediction value of the attribute data of a processing target node: the attribute data of a parent node to which the processing target node in the reference structure belongs; an average of the attribute data of the parent node and the attribute data of a parent node of the parent node; a weighted average of the attribute data of the parent node and the attribute data of a parent node of the parent node; or an average of the attribute data of nearby nodes of the processing target node.

16. The information processing apparatus according to claim 14, wherein
the prediction residual derivation unit applies a derivation method that minimizes the prediction residual of the geometry data, the attribute data, or both of the geometry data and the attribute data, and the prediction residual derivation unit derives the prediction residuals of the geometry data and the attribute data in accordance with the derivation method.

**17.** The information processing apparatus according to claim 1, wherein

the reference structure forming unit further forms a reference structure of attribute data in encoding of the point cloud, independently of the reference structure of the geometry data,
the prediction residual derivation unit further derives a prediction value of the attribute data and further derives a prediction residual that is a difference between the attribute data and the prediction value, for each point on a basis of the reference structure of the attribute data formed by the reference structure forming unit, and
the encoding unit further encodes the prediction residual of the attribute data of each point, the prediction residual being derived by the prediction residual derivation unit.

**18.** An information processing method comprising:

forming a reference structure of geometry data in encoding of a point cloud, the reference structure being layered according to groups into which points of the point cloud representing a three-dimensional shaped object as a set of the points are classified;
deriving a prediction value of the geometry data and deriving a prediction residual that is a difference between the geometry data and the prediction value, for each point on a basis of the formed reference structure; and
encoding the derived prediction residual of the geometry data of each point.

**19.** An information processing apparatus comprising:
a decoding unit configured to decode coded data corresponding to a group layer that is desired among coded data obtained by encoding a prediction residual that is a difference between geometry data of each point and a prediction value of the geometry data, the prediction residual being derived on a basis of a reference structure, on a basis of layer information indicating the group layer that is a layer according to each of groups in the reference structure of the geometry data in encoding of a point cloud, the reference structure being layered according to the groups into which points of the point cloud representing a three-dimensional shaped object as a set of the points are classified.

**20.** An information processing method comprising:
decoding coded data corresponding to a group layer that is desired among coded data obtained by encoding a prediction residual that is a difference between geometry data of each point and a prediction value of the geometry data, the prediction residual being derived on a basis of a reference structure, on a basis of layer information indicating the group layer that is a layer according to each of groups in the reference structure of the geometry data in encoding of a point cloud, the reference structure being layered according to the groups into which points of the point cloud representing a three-dimensional shaped object as a set of the points are classified.

## FIG. 1

Branch vertex
with 3 children

Root vertex ~11

13~ Branch vertex
with 2 children

14~

Branch vertex
with one child

Leaf vertex

EP 4 174 780 A1

*FIG. 2*

EP 4 174 780 A1

# FIG. 3

CAPTURE ORDER: 0, 1, 2, 3, 4, 5

A

DECODING ORDER: 0, 1, 3, 4, 5, 2

B

DECODING ORDER: 0, 1, 2, 3, 4, 5

C

EP 4 174 780 A1

## FIG. 4

| | EXTENSION OF Predictive Geometry Coding |
|---|---|
| 1 | GROUP LAYERING IS PERFORMED ON REFERENCE STRUCTURE |
| 1 − 1 | POINTS ARE GROUPED AND SORTED |
| 1 − 1 − 1 | GROUPING IS PERFORMED IN ACCORDANCE WITH POSITIONS OF POINTS |
| 1 − 1 − 2 | GROUPING IS PERFORMED IN ACCORDANCE WITH FEATURES OF POINTS |
| 1 − 2 | LAYER INFORMATION IS SIGNALED |
| 1 − 2 − 1 | SIGNALING IS PERFORMED IN PARENT NODE |
| 1 − 2 − 2 | SIGNALING IS PERFORMED IN CHILD NODE |
| 1 − 3 | QUANTIZATION STEP IS CONTROLLED FOR EACH LAYER |
| 1 − 3 − 1 | QUANTIZATION STEP OF EACH LAYER IS SIGNALED |
| 1 − 4 | ABOUT ENCODING |
| 1 − 4 − 1 | ARITHMETIC ENCODING IS INDEPENDENTLY PERFORMED FOR EACH LAYER |
| 1 − 4 − 2 | ARITHMETIC ENCODING IS PERFORMED WITHOUT CLASSIFICATION FOR EACH LAYER |

## FIG. 5

A

B

C

EP 4 174 780 A1

## FIG. 6

EP 4 174 780 A1

*FIG. 7*

## FIG. 8

ATTRIBUTE DATA

131 — REFERENCE STRUCTURE FORMING UNIT

132 — STACK

133 — PREDICTION MODE DETERMINATION UNIT

134 — ENCODING UNIT

135 — PREDICTION POINT GENERATION UNIT

111

EP 4 174 780 A1

*FIG. 9*

151
152
153
154

| GROUP-CLASSIFICATION PROCESSING UNIT | SORTING UNIT | GROUP-LAYERED REFERENCE STRUCTURE FORMING UNIT | LAYER INFORMATION GENERATION UNIT |

131

EP 4 174 780 A1

# FIG. 10

ENCODING PROCESS START

ENCODING OF GEOMETRY DATA — S101

ENCODE ATTRIBUTE DATA — S102

END

## FIG. 11

( GEOMETRY DATA ENCODING PROCESS START )

| FORMATION OF REFERENCE STRUCTURE | S131 |

| PUT HEAD NODE OF REFERENCE STRUCTURE INTO STACK | S132 |

| ACQUIRE POINT FROM STACK | S133 |

| DERIVE PREDICTION RESIDUAL OF GEOMETRY DATA AND DETERMINE PREDICTION MODE | S134 |

| ENCODE PREDICTION MODE | S135 |

| ENCODE PREDICTION RESIDUAL OF GEOMETRY DATA | S136 |

| ENCODE CHILD NODE INFORMATION | S137 |

| ENCODE LAYER INFORMATION | S138 |

IS CHILD NODE TO BE ENCODED? S139
NO

YES

| PUT CHILD NODE INTO STACK | S140 |

| GENERATE GEOMETRY DATA OF PREDICTION POINT | S141 |

IS STACK EMPTY? S142
NO

YES

( RETURN )

# FIG. 12

```
( REFERENCE STRUCTURE FORMING PROCESS START )
                        │
                        ▼
┌────────────────────────────────────────────┐
│   PERFORM GROUP CLASSIFICATION OF POINTS    │ S161
└────────────────────────────────────────────┘
                        │
                        ▼
┌────────────────────────────────────────────┐
│       PERFORM SORTING FOR EACH GROUP        │ S162
└────────────────────────────────────────────┘
                        │
                        ▼
┌────────────────────────────────────────────┐
│ FORM REFERENCE STRUCTURE IN SORTED ORDER    │ S163
│    AND PERFORM LAYERING FOR EACH GROUP      │
└────────────────────────────────────────────┘
                        │
                        ▼
┌────────────────────────────────────────────┐
│  GENERATE LAYER INFORMATION OF EACH POINT   │ S164
└────────────────────────────────────────────┘
                        │
                        ▼
                   ( RETURN )
```

*FIG. 13*

211

GEOMETRY DATA
DECODING UNIT

212

ATTRIBUTE DATA
DECODING UNIT

200

*FIG. 14*

ATTRIBUTE DATA

211

231 STORAGE UNIT

232 STACK

233 DECODING UNIT

234 GEOMETRY DATA GENERATION UNIT

235 PREDICTION POINT GENERATION UNIT

# FIG. 15

```
        ( DECODING PROCESS START )
                    |
                    v
   | DECODING OF GEOMETRY DATA |  S201
                    |
                    v
   |   DECODE ATTRIBUTE DATA   |  S202
                    |
                    v
            (     END     )
```

# FIG. 16

```
( GEOMETRY DATA DECODING PROCESS START )
                    │
                    ▼
┌─────────────────────────────────────────────────┐
│ PUT HEAD NODE OF REFERENCE STRUCTURE INTO STACK  │ S231
└─────────────────────────────────────────────────┘
                    │
                    ▼
┌─────────────────────────────────────────────────┐
│           ACQUIRE POINT FROM STACK               │ S232
└─────────────────────────────────────────────────┘
                    │
                    ▼
┌─────────────────────────────────────────────────┐
│      DECODE CODED DATA OF LAYER INFORMATION      │ S233
└─────────────────────────────────────────────────┘
                    │
                    ▼
┌─────────────────────────────────────────────────┐
│  DECODE CODED DATA OF PREDICTION RESIDUAL OF     │ S234
│   PREDICTION MODE AND GEOMETRY DATA              │
└─────────────────────────────────────────────────┘
                    │
                    ▼
┌─────────────────────────────────────────────────┐
│           GENERATE GEOMETRY DATA                 │ S235
└─────────────────────────────────────────────────┘
                    │
                    ▼
┌─────────────────────────────────────────────────┐
│  GENERATE GEOMETRY DATA OF PREDICTION POINT      │ S236
└─────────────────────────────────────────────────┘
                    │
                    ▼
┌─────────────────────────────────────────────────┐
│        DECODE CHILD NODE INFORMATION             │ S237
└─────────────────────────────────────────────────┘
                    │
                    ▼
<  IS CHILD NODE ALSO TO BE DECODED?  >  S238  NO ─┐
                    │ YES                           │
                    ▼                               │
┌─────────────────────────────────────┐            │
│     PUT CHILD NODE INTO STACK        │ S239       │
└─────────────────────────────────────┘            │
                    │◄─────────────────────────────┘
                    ▼
NO ◄< IS STACK EMPTY? >  S240
                    │ YES
                    ▼
              ( RETURN )
```

## FIG. 17

EP 4 174 780 A1

# FIG. 18

```
        ( TRANSCODING PROCESS START )
                      │
                      ▼
    ┌───────────────────────────────────┐
    ││  DECODING OF GEOMETRY DATA       │  S301
    └───────────────────────────────────┘
                      │
                      ▼
    ┌───────────────────────────────────┐
    ││  ENCODING OF GEOMETRY DATA       │  S302
    └───────────────────────────────────┘
                      │
                      ▼
    ┌───────────────────────────────────┐
    │   TRANSCODE ATTRIBUTE DATA        │  S303
    └───────────────────────────────────┘
                      │
                      ▼
                  (  END  )
```

## FIG. 19

| | | |
|---|---|---|
| EXTENSION OF Predictive Geometry Coding | | |
| 2 | | Predictive Geometry Coding IS APPLIED TO ENCODING OF ATTRIBUTE DATA |
| | 2−1 | ABOUT REFERENCE STRUCTURE |
| | | 2−1−1 REFERENCE STRUCTURE IS MADE COMMON BETWEEN GEOMETRY DATA AND ATTRIBUTE DATA |
| | | 2−1−2 REFERENCE STRUCTURE OF ALL OR SOME OF ATTRIBUTE DATA IS FORMED INDEPENDENTLY OF GEOMETRY DATA |
| | 2−2 | ABOUT ATTRIBUTE DATA OF PREDICTION POINT |
| | | 2−2−1 SAME AS ATTRIBUTE DATA OF PARENT NODE |
| | | 2−2−2 AVERAGE OF PARENT NODE AND PARENT NODE THEREOF |
| | | 2−2−3 WEIGHTED AVERAGE OF PARENT NODE AND PARENT NODE THEREOF, WITH RECIPROCAL OF DISTANCE AS WEIGHT |
| | | 2−2−4 AVERAGE OF ATTRIBUTE DATA OF NEARBY k NODES OF DECODED NODE |
| | 2−3 | ABOUT METHOD OF SELECTING PREDICTION POINT |
| | | 2−3−1 PREDICTION POINT AT WHICH PREDICTION RESIDUAL OF GEOMETRY DATA IS MINIMIZED IS SELECTED |
| | | 2−3−2 PREDICTION POINT AT WHICH PREDICTION RESIDUAL OF ATTRIBUTE DATA IS MINIMIZED IS SELECTED |
| | | 2−3−3 PREDICTION POINT AT WHICH PREDICTION RESIDUALS OF GEOMETRY DATA AND ATTRIBUTE DATA ARE MINIMIZED IS SELECTED |

# FIG. 20

# FIG. 21

```
( ENCODING PROCESS START )
            │
            ▼
┌─────────────────────────────────────────┐
│        FORM REFERENCE STRUCTURE          │ S401
└─────────────────────────────────────────┘
            │
            ▼
┌─────────────────────────────────────────┐
│ PUT HEAD NODE OF REFERENCE STRUCTURE INTO STACK │ S402
└─────────────────────────────────────────┘
            │
            ▼
┌─────────────────────────────────────────┐
│        ACQUIRE POINT FROM STACK          │ S403
└─────────────────────────────────────────┘
            │
            ▼
┌─────────────────────────────────────────┐
│ DERIVE PREDICTION RESIDUAL OF GEOMETRY DATA AND │ S404
│       DETERMINE PREDICTION MODE          │
└─────────────────────────────────────────┘
            │
            ▼
┌─────────────────────────────────────────┐
│          ENCODE PREDICTION MODE          │ S405
└─────────────────────────────────────────┘
            │
            ▼
┌─────────────────────────────────────────┐
│ ENCODE PREDICTION RESIDUAL OF GEOMETRY DATA │ S406
└─────────────────────────────────────────┘
            │
            ▼
┌─────────────────────────────────────────┐
│       PERFORM RECOLOR PROCESSING TO      │ S407
│ DERIVE PREDICTION RESIDUAL OF ATTRIBUTE DATA │
└─────────────────────────────────────────┘
            │
            ▼
┌─────────────────────────────────────────┐
│ ENCODE PREDICTION RESIDUAL OF ATTRIBUTE DATA │ S408
└─────────────────────────────────────────┘
            │
            ▼
┌─────────────────────────────────────────┐
│       ENCODE CHILD NODE INFORMATION      │ S409
└─────────────────────────────────────────┘
            │
            ▼
<      IS CHILD NODE TO BE ENCODED?       >  S410
            │ YES              NO ──┐
            ▼                       │
┌─────────────────────────────────────────┐
│         PUT CHILD NODE INTO STACK        │ S411
└─────────────────────────────────────────┘
            │ ◄─────────────────────┘
            ▼
┌─────────────────────────────────────────┐
│ GENERATE GEOMETRY DATA AND ATTRIBUTE DATA OF │ S412
│            PREDICTION POINT              │
└─────────────────────────────────────────┘
            │
            ▼
<            IS STACK EMPTY?              >  S413
   NO                 │ YES
                      ▼
                  (  END  )
```

FIG. 22

## FIG. 23

```
          ( DECODING PROCESS START )
                      │
                      ▼
PUT HEAD NODE OF REFERENCE STRUCTURE INTO STACK    S501
                      │
        ┌─────────────▼
        │     ACQUIRE POINT FROM STACK              S502
        │             │
        │             ▼
        │  DECODE CODED DATA OF PREDICTION RESIDUAL OF   S503
        │     PREDICTION MODE AND GEOMETRY DATA
        │             │
        │             ▼
        │     GENERATE GEOMETRY DATA                S504
        │             │
        │             ▼
        │  DECODE CODED DATA OF PREDICTION RESIDUAL OF   S505
        │           ATTRIBUTE DATA
        │             │
        │             ▼
        │     GENERATE ATTRIBUTE DATA               S506
        │             │
        │             ▼
        │  GENERATE GEOMETRY DATA AND ATTRIBUTE DATA OF  S507
        │           PREDICTION POINT
        │             │
        │             ▼
        │     DECODE CHILD NODE INFORMATION         S508
        │             │
        │             ▼
        │  < IS CHILD NODE ALSO TO BE DECODED? >    S509 ──NO──┐
        │             │YES                                     │
        │             ▼                                        │
        │     PUT CHILD NODE INTO STACK             S510        │
        │             │◄───────────────────────────────────────┘
        │             ▼
        └──NO── < IS STACK EMPTY? >                S511
                      │YES
                      ▼
                  (  END  )
```

*FIG. 24*

611

DECODING UNIT

612

ENCODING UNIT

600

EP 4 174 780 A1

# FIG. 25

```
          ╭─────────────────────────────────────╮
          │      TRANSCODING PROCESS START      │
          ╰─────────────────────────────────────╯
                            │
                            ▼
  ┌────────────────────────────────────────────────┐ S601
  │         DECODING OF GEOMETRY DATA AND           │
  │                ATTRIBUTE DATA                   │
  └────────────────────────────────────────────────┘
                            │
                            ▼
  ┌────────────────────────────────────────────────┐ S602
  │         ENCODING OF GEOMETRY DATA AND           │
  │                ATTRIBUTE DATA                   │
  └────────────────────────────────────────────────┘
                            │
                            ▼
                      ╭──────────╮
                      │   END    │
                      ╰──────────╯
```

## FIG. 26

( ENCODING PROCESS START )

| FORMATION OF REFERENCE STRUCTURE | S701 |

| PUT HEAD NODE OF REFERENCE STRUCTURE INTO STACK | S702 |

| ACQUIRE POINT FROM STACK | S703 |

| DERIVE PREDICTION RESIDUAL OF GEOMETRY DATA AND DETERMINE PREDICTION MODE | S704 |

| ENCODE PREDICTION MODE | S705 |

| ENCODE PREDICTION RESIDUAL OF GEOMETRY DATA | S706 |

| PERFORM RECOLOR PROCESSING TO DERIVE PREDICTION RESIDUAL OF ATTRIBUTE DATA | S707 |

| ENCODE PREDICTION RESIDUAL OF ATTRIBUTE DATA | S708 |

| ENCODE CHILD NODE INFORMATION | S709 |

| ENCODE LAYER INFORMATION | S710 |

< IS CHILD NODE TO BE ENCODED? > S711
NO

YES

| PUT CHILD NODE INTO STACK | S712 |

| GENERATE GEOMETRY DATA AND ATTRIBUTE DATA OF PREDICTION POINT | S713 |

< IS STACK EMPTY? > S714
NO

YES

( END )

## FIG. 27

```
( DECODING PROCESS START )
            │
            ▼
PUT HEAD NODE OF REFERENCE STRUCTURE INTO STACK   S801
            │
            ▼
      ACQUIRE POINT FROM STACK                    S802
            │
            ▼
   DECODE CODED DATA OF LAYER INFORMATION          S803
            │
            ▼
DECODE CODED DATA OF PREDICTION RESIDUAL OF        S804
PREDICTION MODE AND GEOMETRY DATA
            │
            ▼
      GENERATE GEOMETRY DATA                       S805
            │
            ▼
DECODE CODED DATA OF PREDICTION RESIDUAL OF        S806
ATTRIBUTE DATA
            │
            ▼
      GENERATE ATTRIBUTE DATA                      S807
            │
            ▼
GENERATE GEOMETRY DATA AND ATTRIBUTE DATA OF       S808
PREDICTION POINT
            │
            ▼
   DECODE CHILD NODE INFORMATION                   S809
            │
            ▼
   IS CHILD NODE ALSO TO BE DECODED?               S810
            │ YES                            NO
            ▼
      PUT CHILD NODE INTO STACK                    S811
            │
            ▼
        IS STACK EMPTY?                            S812
   NO       │ YES
            ▼
          ( END )
```

# FIG. 28

EP 4 174 780 A1

## INTERNATIONAL SEARCH REPORT

International application No.

PCT/JP2021/022800

### A. CLASSIFICATION OF SUBJECT MATTER
Int. Cl. G06T9/00(2006.01)i, H04N19/50(2014.01)i, H04N19/597(2014.01)i
FI: G06T9/00, H04N19/50, H04N19/597

According to International Patent Classification (IPC) or to both national classification and IPC

### B. FIELDS SEARCHED

Minimum documentation searched (classification system followed by classification symbols)
Int. Cl. G06T9/00, H04N19/50, H04N19/597

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/240286 A1 (PANASONIC INTELLECTUAL PROPERTY CORPORATION OF AMERICA) 19 December 2019 (2019-12-19), abstract, paragraphs [0001]-[0012], fig. 1-128 | 1-20 |
| A | WO 2019/069711 A1 (SONY CORP.) 11 April 2019 (2019-04-11), abstract | 1-20 |
| A | JP 2000-509150 A (CYRA TECHNOLOGIES, INC.) 18 July 2000 (2000-07-18), abstract | 1-20 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.07.2021 | 03.08.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

63

**INTERNATIONAL SEARCH REPORT**
Information on patent family members

International application No.

PCT/JP2021/022800

| Patent Documents referred to in the Report | Publication Date | Patent Family | Publication Date |
|---|---|---|---|
| WO 2019/240286 A1 | 19.12.2019 | US 2021/0099696 A1 abstract, fig. 1-128, paragraphs [0001]-[0140] CN 112313708 A summary | |
| WO 2019/069711 A1 | 11.04.2019 | US 2020/0273211 A1 abstract EP 3694110 A1 abstract CN 111183588 A summary | |
| JP 2000-509150 A | 18.07.2000 | US 5988862 A abstract EP 0895577 B1 paragraph [0010] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Student Member IEEE. **R. MEKURIA ; K. BLOM ; P. CESAR.** Design, Implementation and Evaluation of a Point Cloud Codec for Tele-Immersive Video. IEEE

- **ZHENZHEN GAO ; DAVID FLYNN ; ALEXIS TOURAPIS ; KHALED MAMMOU.** G-PCC] [New proposal] Predictive Geometry Coding. *ISO/IEC JTC1/SC29/WG11 MPEG2019/m51012,* October 2019